# EUROPEAN PATENT SPECIFICATION

(11) **EP 0 616 475 B1**
(45) Date of publication and mention of the grant of the patent: **28.04.1999**
(21) Application number: 94301916.6
(22) Date of filing: 17.03.1994
(51) Int. Cl.: H04N 9/78

(54) **Adaptive video signal processing circuit**
Adaptive Videosignalverarbeitungsschaltung
Circuit de traitement de signal vidéo adaptif

(30) Priority: 17.03.1993 US 32258
(43) Date of publication of application: 21.09.1994
(73) Proprietor: Samsung Electronics Co., Ltd., Suwon-City, Kyungi-do (KR)
(72) Inventor: Ko, Jung-Wan, Lawrenceville, New Jersey 08648 (US)
(74) Representative: Stanley, David William

(56) References cited:
- EP-A- 0 360 380
- GB-A- 2 246 926
- US-A- 4 754 322
- US-A- 4 819 062

## Description

The invention relates to adaptive video processing, and is concerned particularly, although not exclusively, with adaptive video peaking circuitry, as can be used in conjunction with a luma/chroma separator for separating a luminance signal (or "luma" or "Y") and a chrominance signal (or "chroma" or "C") from an NTSC (or other standard) composite video signal.

U.S. patent No. US-A-4,178,609 issued 11 December 1979 to R. C. Beutel and entitled "COMB FILTER HAVING IMPROVED LUMINANCE RESPONSE" describes an adaptive interline comb filter used for separating luma and chroma from each other in respective responses to a composite video signal. A detector is used with the comb filter to detect lack of correlation in successive lines of chroma, responsive to which the operation of the comb filter is changed so as to reduce uncancelled chroma in the separated luma.

U.S. patent No. US-A-4,498,099 issued 5 February 1985 to D. H. Pritchard and entitled "APPARATUS FOR FRAME-TO-FRAME COMB FILTERING COMPOSITE TV SIGNAL" describes reduction of objectionable double images in the region of moving edges. During times when moving edges are detected, the chroma signal separated by frame combing is lowpass filtered and combined with the luma signal separated by frame combing, thereby to provide a better separated luma signal to replace the separated luma signal obtained simply by frame combing.

U.S. patent No. US-A-4,498,100 issued 5 February 1985 to R. M. Bunting and A. A. Acampora and entitled "APPARATUS FOR FRAME-TO-FRAME COMB FILTERING COMPOSITE TV SIGNAL" describes reduction of the colour distortions around the periphery of reproduced colour images. During times when moving edges are detected, the chroma signal separated by frame combing is added to the luma signal separated by frame combing and the result is bandpass filtered to provide a better separated chroma signal to replace the separated chroma signal obtained simply by frame combing.

U.S. patent No. US-A-4,754,322 issued 28 June 1988 to A. Okuda et alii and entitled "YC-SIGNAL SEPARATION CIRCUIT RESPONSIVE TO MAGNITUDE OF VERTICAL CORRELATION" describes a luma/chroma separator including a frame store memory; a motion detector for detecting frame-to-frame motion, a correlation detector for detecting the magnitude of vertical correlation of pictures on the basis of pictures read out from the frame store memory, a vertical-axis filter for performing luma/chroma separation, a two-dimensional filter for performing luma/chroma separation in both the vertical and horizontal directions, a time-axis filter for performing a filtering operation in the time-axis direction, and a mixer for mixing the outputs of the three filters in accordance with the magnitude of motion and the magnitude of vertical correlation.

European Patent application EP-A-0 360 380 published 28 March 1990 entitled "SEPARATING COMPONENTS OF COMPOSITE DIGITAL VIDEO SIGNALS" describes using vertical comb filters for luma/chroma separation and also using vertical/temporal comb filters for luma/chroma separation. Additive mixing is used to combine comb filter responses, with the mixing ratio being controlled to minimize cross-luminance and cross-colour.

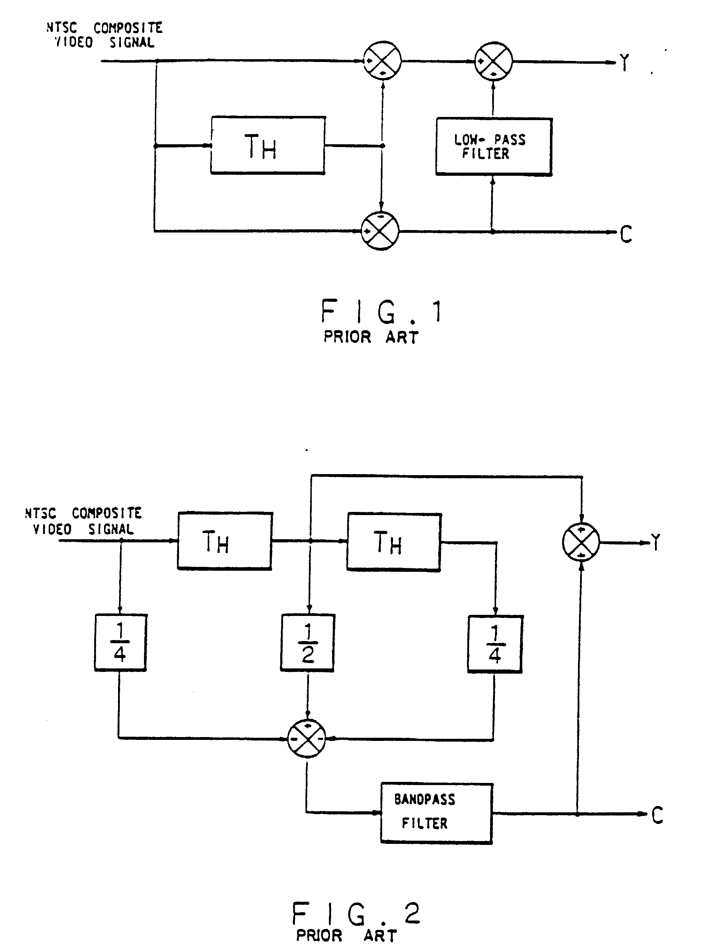

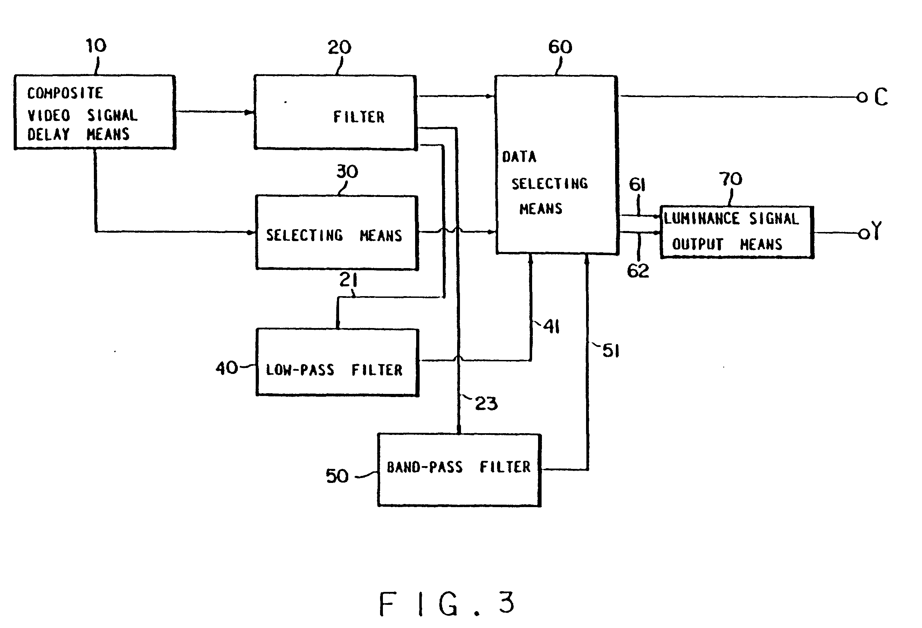

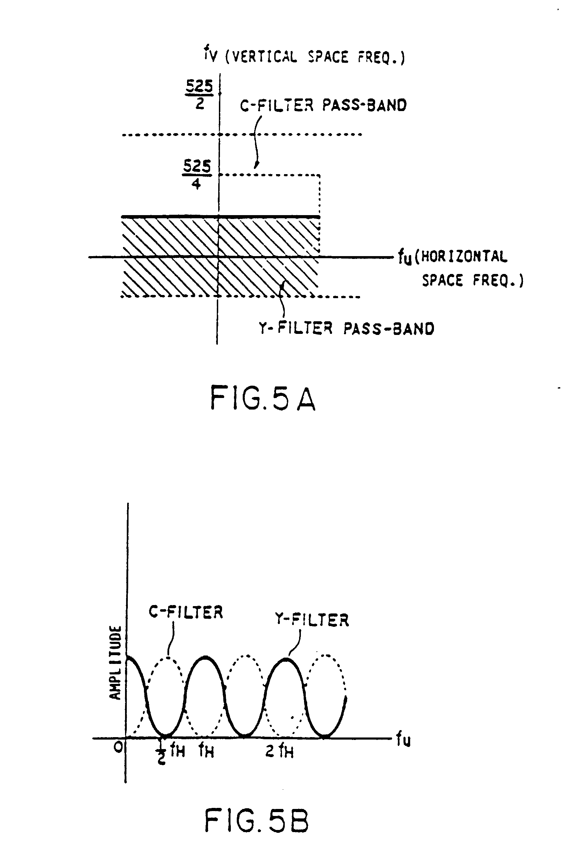

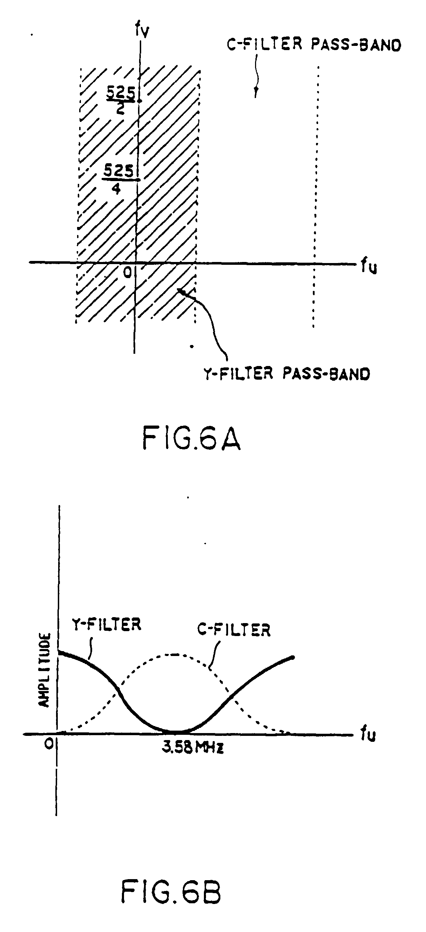

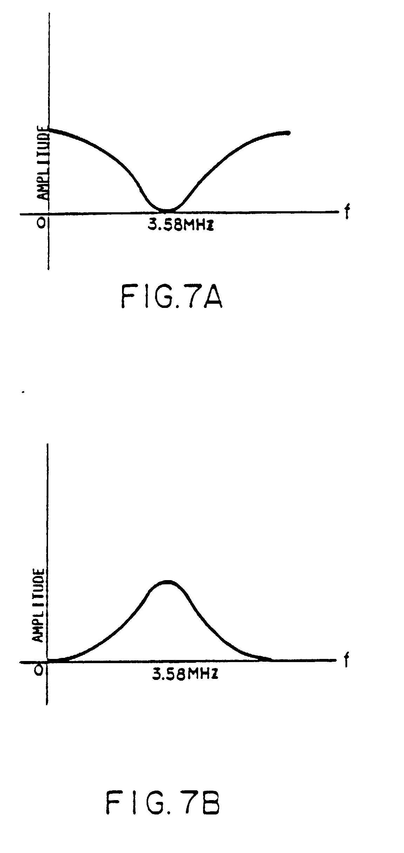

U.S. patent No. US-A-4,819,062 issued 4 April 1989 to Song Dongil and Kim Byung-Jin and entitled "ADAPTIVE-TYPE LUMINANCE/COLOUR SIGNAL SEPARATION CIRCUIT USING THE HORIZONTAL AND VERTICAL CORRELATION IN TELEVISION RECEIVER" describes adaptive comb filtering that avoids the need for frame-to-frame comb filtering. The drawings thereof are reproduced herein as Figures 1 to 7 of the accompanying diagrammatic drawings, in which:
Figure 1 is a schematically illustrated block diagram showing a conventional 1H-type comb filter;
Figure 2 is a schematically illustrated block diagram showing a conventional 2H-type comb filter;
Figure 3 is a block diagram of a Y/C signal separating circuit according to an embodiment of the invention of U.S. patent No. 4,819,062;
Figure 4 is a detailed circuit diagram of the Y/C signal separating circuit shown in Figure 3;
Figures 5A and 5B are graphs which illustrate respectively spatial spectrum and frequency selection characteristics according to an embodiment of the invention of U.S. patent No. US-A-4,819,062;
Figures 6A and 6B are graphs which illustrate respectively two-dimensional spatial spectrum and frequency selection characteristics according to an embodiment of the invention of U.S. patent No. US-A-4,819,062; and
Figures 7A and 7B are graphs which illustrate frequency characteristics of a low-pass filter means and a band-pass filter means, respectively, in Figure 3.

U.S. patent No. US-A-4,819,062 describes a first filter means 25 of a type television engineers commonly refer to as "a highpass vertical comb filter", a second filter means 26 of a type television engineers commonly refer to as "a highpass horizontal comb filter", a third filter means 27 of a type television engineers commonly refer to as "a lowpass vertical comb filter", and a fourth filter means 28 of a type television engineers commonly refer to as "a highpass vertical comb filter".

U.S. patent No. US-A-4,819,062 describes the use of lowpass and bandpass vertical comb filters 25,27 for separating luminance and chrominance signals from the NTSC composite video signal when that signal is descriptive of an edge as would be encountered during a horizontal sweep through the image field. This patent describes the use of lowpass and bandpass horizontal comb filters 26,28 for separating luminance and chrominance signals from the NTSC composite video signal when that signal is descriptive of an edge as would be encountered during a horizontal sweep through the image field. The determination of which method is to be selected for separating luminance and chrominance signals from the NTSC composite video signal is responsive to a comparison made between the response of a vertical scan edge detector 34 and the response of a horizontal scan edge detector 35. The horizontal scan edge detector 35 determines the correlation of the composite video signal in the horizontal direction, and the vertical scan edge detector 34 determines the correlation of the composite video signal in the vertical direction.

U.S. patent No. US-A-4,819,062 further describes the alternative usage of two types of peaking filters for edges. When the luminance and chrominance signals are separated from the NTSC composite video signal using lowpass and bandpass horizontal comb filters, the vertical high frequencies are separated from the response of the bandpass vertical comb filter 25 with a lowpass horizontal comb filter 40. When the luminance and chrominance signals are separated from the NTSC composite video signal using lowpass and bandpass vertical comb filters 25 and 27, the horizontal high frequencies are separated from the response of the lowpass vertical comb filter 27 with a further bandpass horizontal comb filter 50.

For further details of the invention of U.S. patent No. 4,819,062.

U.S. patent application serial No. 07/562,907 filed 6 August 1990 by Christopher H. Strolle, Jung-Wan Ko and Raymond A. Schnitzler; entitled "REMOVAL OF THE FOLDING CARRIER AND SIDEBANDS FROM AN UNFOLDED VIDEO SIGNAL" (published as US-A-5 430 497 on 04 July 1995); and assigned to Samsung Electronics Co., Ltd. describes the use of a soft switch or cross-fader for admixing lowpass-vertical-comb- filtered luminance signal with lowpass-horizontal-comb-filtered luminance signal responsive to a comparison made between the response of a horizontal scan edge detector to the luminance signal supplied for adaptive filtering and the response of a vertical scan edge detector to the luminance signal supplied for adaptive filtering. The luminance signal supplied for lowpass vertical comb filtering and lowpass horizontal comb filtering is described as being obtained by unfolding a folded-spectrum luminance signal demodulated from the frequency-modulated luminance carrier of a playback signal retrieved from a VHS video cassette recording.

According to the terminology employed in U.S. patent application serial No. 07/562,907 and adopted herein, a horizontal scan encountering an edge between white and black is said to encounter a "horizontal edge". The edge may be a vertical line, but it is called a horizontal edge because it would be encountered during a horizontal scan. Similarly, an edge that would be encountered during a vertical scan is called a "vertical edge". The term "edge" is sometimes referred to in the art as a "discontinuity", "transition", or "detail". A horizontal scan edge detector is an edge detector operative to detect any "horizontal edge"; and a vertical scan edge detector is an edge detector operative to detect any "vertical edge".

Published U.K. Patent application GB-A- 2 246 926 (published on 12 February 1992) corresponds to U.S. patent application serial No. 07/562,907.

An adaptive luma/chroma separator of the type described in U.S. patent No. US-A-4,819,062 is modified in accordance with preferred embodiments of the present invention to use cross-fading rather than selection techniques -- i.e. soft switching in place of hard switching -- in forming the separated luma signal and the separated chroma signal. This improvement reduces the visibility of the adaptive change in peaking on textured surfaces.

According to one aspect of the present invention, there is provided adaptive video peaking circuitry for generating an adaptively generated peaking signal responsive to a video signal, said video signal describing line by line scanning of successive image frames and exhibiting changing relative degrees of horizontal correlation and vertical correlation of a picture element currently being scanned and its locally surrounding picture elements, said adaptive video peaking circuitry comprising:
delay circuitry including a plurality of delay elements connected for variously delaying said video signal, the resulting variously delayed video signals generally being descriptive of the scanning of a square array of nine contiguous pixels within a currently scanned image field, said square array having top and middle and bottom rows of pixels arrayed along successive scan lines of said currently scanned image field, said square array having left and middle and right columns of pixels arrayed transversely to successive scan lines of said currently scanned image field;
first bandpass comb filter circuitry for combining said variously delayed video signals descriptive of pixels in said middle column of said square array of nine contiguous pixels, for generating a first bandpass comb filter response;
second bandpass comb filter circuitry for combining said variously delayed video signals descriptive of pixels in said middle row of said square array of nine contiguous pixels, for generating a second bandpass comb filter response thereto;
first lowpass comb filter circuitry for combining said variously delayed video signals descriptive of pixels in said middle column of said square array of nine contiguous pixels, for generating a first lowpass comb filter response;
second lowpass comb filter circuity for combining said variously delayed video signals descriptive of pixels in said middle row of said square array of nine contiguous pixels, for generating a second lowpass comb filter response;
a low-pass filter responding to said first bandpass comb filter response for separating a vertical peaking signal contained in its vertical high frequencies, while suppressing its horizontal high frequencies;
a band-pass filter responding to said first lowpass comb filter response for separating a horizontal peaking signal contained in its horizontal high frequencies;
a vertical-scan edge detector for supplying a vertical-scan edge detector response indicative of the absolute value of the difference between upper and lower pixels in said square array of pixels, a type of which is known in the prior art; and
a horizontal-scan edge detector for supplying a horizontal-scan edge detector response indicative of the absolute value of the difference between left and right pixels in said square array of pixels, a type of which is known in the prior art;
CHARACTERISED BY
a cross-fader for supplying said automatically adaptive video peaking signal by linearly and constructively combining said horizontal peaking signal and said vertical peaking signal in proportions controlled by a cross-fader control signal, which proportions include at least one value between 0:1 and 1:0;
a subtractor connected for differentially combining said vertical edge detector response and said horizontal edge detector response to generate a difference signal; and
read-only memory circuitry connected for supplying said cross-fader control signal in response to the various values of said difference signal applied thereto as address signal, said cross-fader control signal increasing the proportion of said horizontal peaking signal component and decreasing the proportion of vertical peaking signal component in said automatically adaptive video peaking signal when said horizontal-scan edge detector response exceeds said vertical-scan edge detector response, and said cross-fader control signal respectively decreasing the proportion of said horizontal peaking signal component and increasing the proportion of said vertical peaking signal component in said automatically adaptive video peaking signal when said vertical-scan edge detector response exceed said horizontal-scan edge detector response.

Preferably the peaking circuitry further includes:
a further cross-fader for supplying a reduced-detail video signal by linearly and constructively combining said first lowpass comb filter response and said second lowpass comb filter response in proportions controlled by said cross-fader control signal, so as to be similar to those proportions in which said horizontal peaking signal and said vertical peaking signal are combined by said cross-fader; and
circuitry (70) for combining said automatically adaptive video peaking signal supplied by said cross-fader in controlled proportion together with said reduced-detail video signal supplied by said further cross-fader.

Preferably, the peaking circuitry is included in a luma/chroma separator for separating luminance and chrominance components of composite video signal and providing automatically adaptive luminance peaking, which said luma/chroma separator further includes:
a further cross-fader for supplying a reduced-detail video signal by linearly and constructively combining said first lowpass comb filter response and said second lowpass comb filter response in proportions controlled by said cross-fader control signal, so as to be similar to those proportions in which said horizontal peaking signal and said vertical peaking signal are combined by said cross-fader;
circuitry for combining said automatically adaptive video peaking signal supplied by said cross-fader in controlled proportion together with said reduced-detail video signal supplied by said further cross-fader;
chroma selection circuitry of a type known per se for selecting chroma from said first bandpass comb filter response when said vertical-scan edge detector response is smaller than said horizontal-scan edge detector response and for selecting chroma from said second bandpass comb filter response when said horizontal-scan edge detector response is smaller than said vertical-scan edge detector response.

Preferably, said chroma selection circuitry selects chroma from said first bandpass comb filter response or from said second bandpass comb filter response, as controlled by a sign bit extracted from said difference signal.

Suitably, the peaking circuitry being included in a luma/chroma separator for separating luminance and chrominance components of composite video signal and providing automatically adaptive luminance peaking, which said luma/chroma separator further includes:
a further cross-fader for supplying a reduced-detail video signal by linearly and constructively combining said first lowpass comb filter response and said second lowpass comb filter response in proportions similar to those in which said horizontal peaking signal and said vertical peaking signal are combined by said cross-fader;
circuitry for combining said automatically adaptive video peaking signal supplied by said cross-fader in controlled proportion together with said reduced-detail video signal supplied by said further cross-fader; and
a still further cross-fader for supplying chrominance signal by linearly and constructively combining said first bandpass comb filter response and said second bandpass comb filter response in proportions controlled by said cross-fader control signal, so as to be similar to those proportions in which said horizontal peaking signal and said vertical peaking signal are combined by said cross-fader.

Preferably, said still further cross-fader comprises:
a respective pair of digital multipliers receptive of separate ones of said first bandpass comb filter response and said second bandpass comb filter response as respective multiplicand signals, receptive of said cross-fader control signal as read from said read-only memory and of a complement of said cross-fader control signal as respective multiplier signals and supplying respective product signals; and
means linearly and constructively combining the respective product signals of said respective pair of multipliers for generating said chrominance signal.

Preferably, said further cross-fader comprises:
a respective pair of digital multipliers receptive of separate ones of said first lowpass comb filter response and said second lowpass comb filter response as respective multiplicand signals, receptive of said cross-fader control signal as read from said read-only memory and of a complement of said cross-fader control signal as respective multiplier signals and supplying respective product signals; and
means linearly and constructively combining the respective product signal of said respective pair of multipliers for generating said reduced-detail video signal.

Preferably, said cross-fader comprises:
a respective pair of digital multipliers receptive of separate ones of said horizontal peaking signal and said vertical peaking signal as respective multiplicand signals, receptive of said cross-fader control signal as read from said read-only memory and of a complement of said cross-fader control signal as respective multiplier signals and supplying respective product signals; and
means linearly and constructively combining the respective product signals of said respective pair of multipliers for generating said automatically adaptive video peaking signal.

Preferably, the pixels in the top row of said square array are identified from left to right as a, b and c, respectively; the pixels in the middle row of said square array are identified from left to right as d, e and f, respectively; and the pixels in the bottom row of said square array are identified from left to right as g, h and i, respectively; CHARACTERISED BY said vertical-scan edge detector combining signals at points a, b, c, g, h and i with weights in (-1/4): (-1/2): (-1/4): (1/4): (1/2): (1/4) ratio for generating said vertical-scan edge detector response.

Preferably, the pixels in the top row of said square array are identified from left to right as a, b and c, respectively; the pixels in the middle row of said square array are identified from left to right as d, e and f, respectively; and the pixels in the bottom row of said square array are identified from left to right as g, h and i, respectively; CHARACTERISED BY said horizontal-scan edge detector combining signals at points a, c, d, f, g and i with weights in (-1/4): (1/4): (-1/2): (1/2): (-1/4): (1/4) ratio for generating said horizontal-scan edge detector response.

Preferably, the pixels in the top row of said square array are identified from left to right as a, b and c, respectively; the pixels in the middle row of said square array are identified from left to right as d, e and f, respectively; and the pixels in the bottom row of said square array are identified from left to right as g, h and i, respectively; CHARACTERISED BY said horizontal-scan edge detector combining signals at points a, b, c, d, e, f, g, h and i with weights in (-1/16): (1/8): (-1/16): (-1/8): (1/4): (-1/8): (-1/16): (1/8): (-1/16) ratio for generating said horizontal-scan edge detector response.

Preferably, the pixels in the top row of said square array are identified from left to right as a, b and c, respectively; the pixels in the middle row of said square array are identified from left to right as d, e and f, respectively; and the pixels in the bottom row of said square array are identified from left to right as g, h and i, respectively; CHARACTERISED BY said vertical-scan edge detector combining signals at points a, b, c, d, e, f, g, h and i with weights in (-1/16): (-1/8): (-1/16): (1/8): (1/4): (1/8): (-1/16): (-1/8): (-1/16) ratio for generating said vertical scan edge detection response.

The invention extends to video processing apparatus including adaptive video peaking circuitry, an adaptive luma/chroma separator, or an adaptive chroma separator, according to any of the preceding aspects of the invention.

The invention extends to television and/or video recording apparatus including adaptive video peaking circuitry, an adaptive luma/chroma separator, or an adaptive chroma separator, according to any of the preceding aspects of the invention.

For a better understanding of the invention, and to show how embodiments of the same may be carried into effect, reference will now be made, by way of example, to the accompanying diagrammatic drawings, in which:

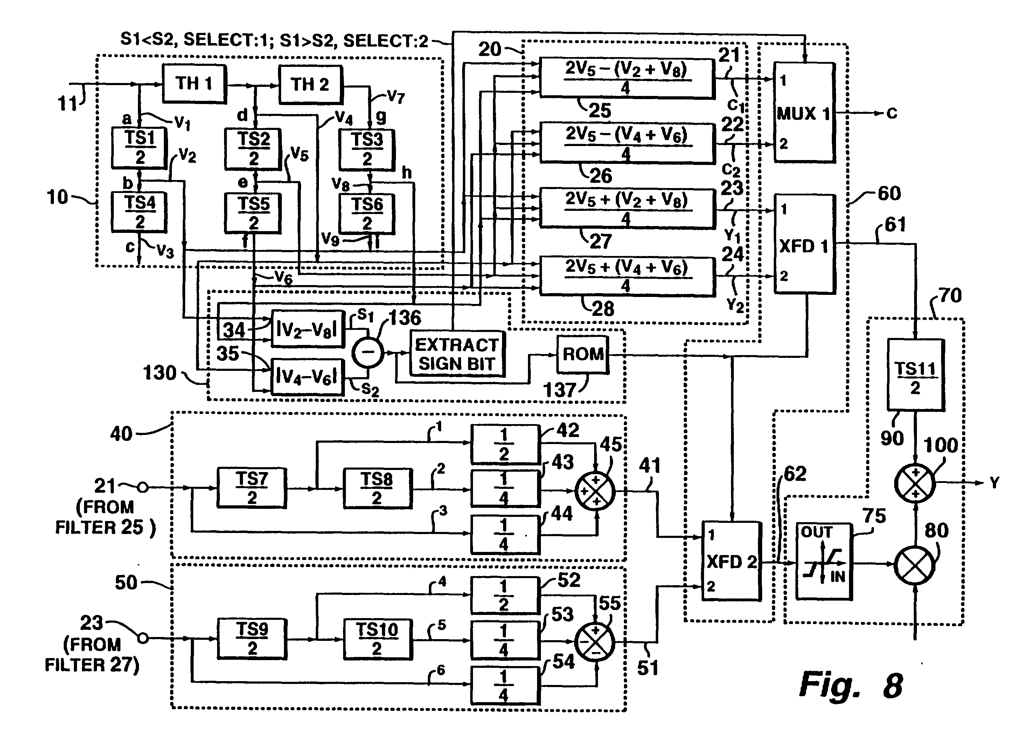

Figure 8 is a block diagram of a luma/chroma separator embodying one example of the invention;

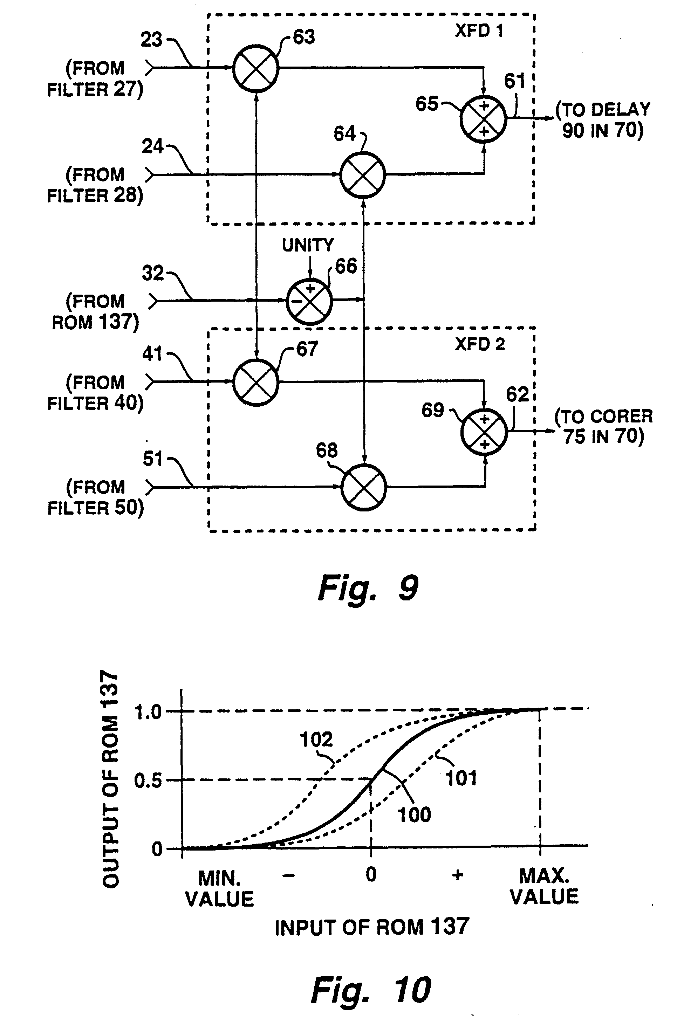

Figure 9 is a block diagram of details of cross-fader circuits and control circuitry for them, as may be used in the Figure 8 luma/chroma separator;
Figure 10 is a plot of a transfer function described by a look-up table stored in a read-only memory in the Figure 8 control circuitry for the cross-fader circuits;

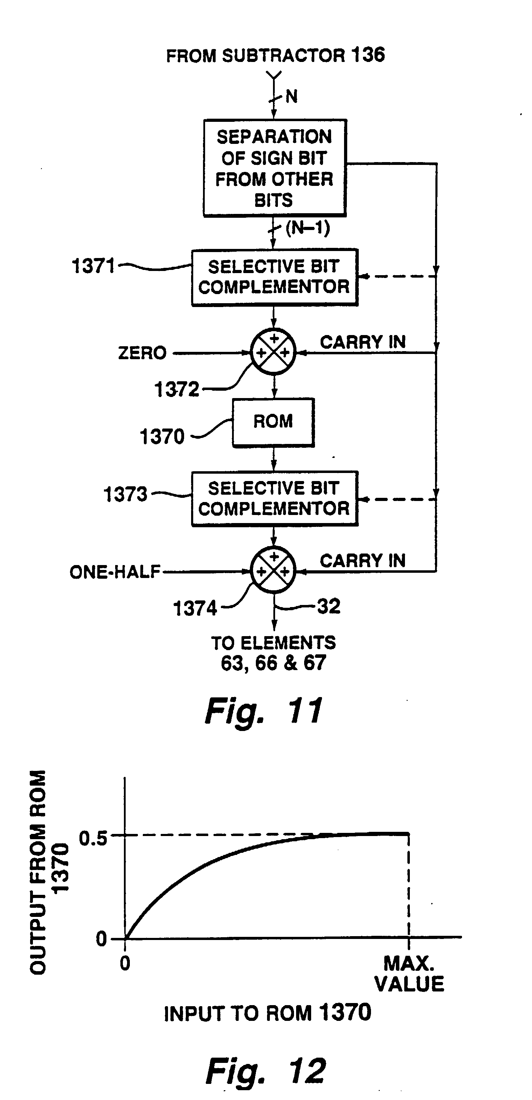

Figure 11 is a block diagram of circuitry that in an alternative embodiment of the invention replaces the read-only memory in the Figure 8 control circuitry for the cross-fader circuits with a read-only memory half as large and some digital arithmetic circuitry;
Figure 12 is a plot of a transfer function described by a look-up table stored in the read-only memory shown in Figure 11;

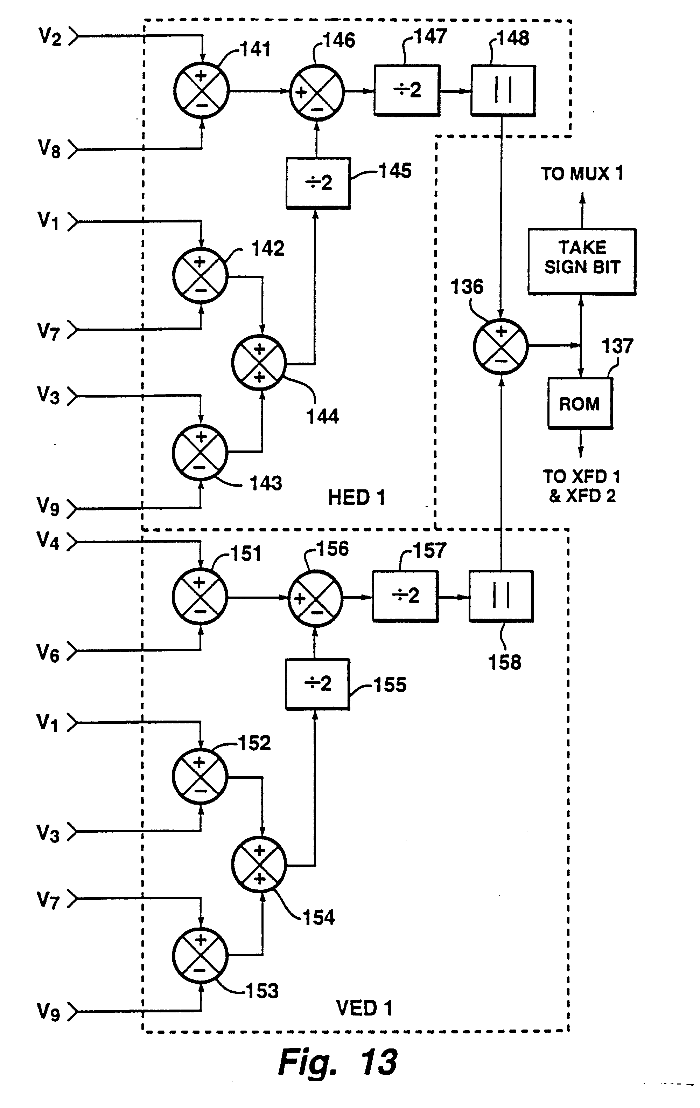

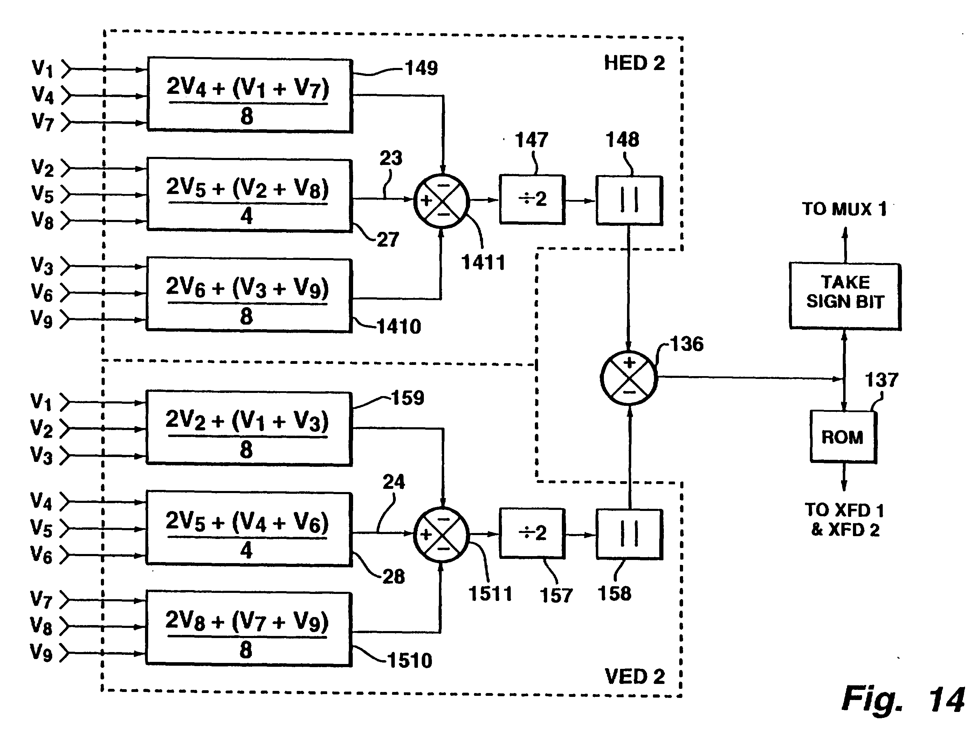

Figures 13 and 14 are block diagrams each showing circuitry that can be used to modify or further modify the Figure 8 luma/chroma separator in still further embodiments of the invention;

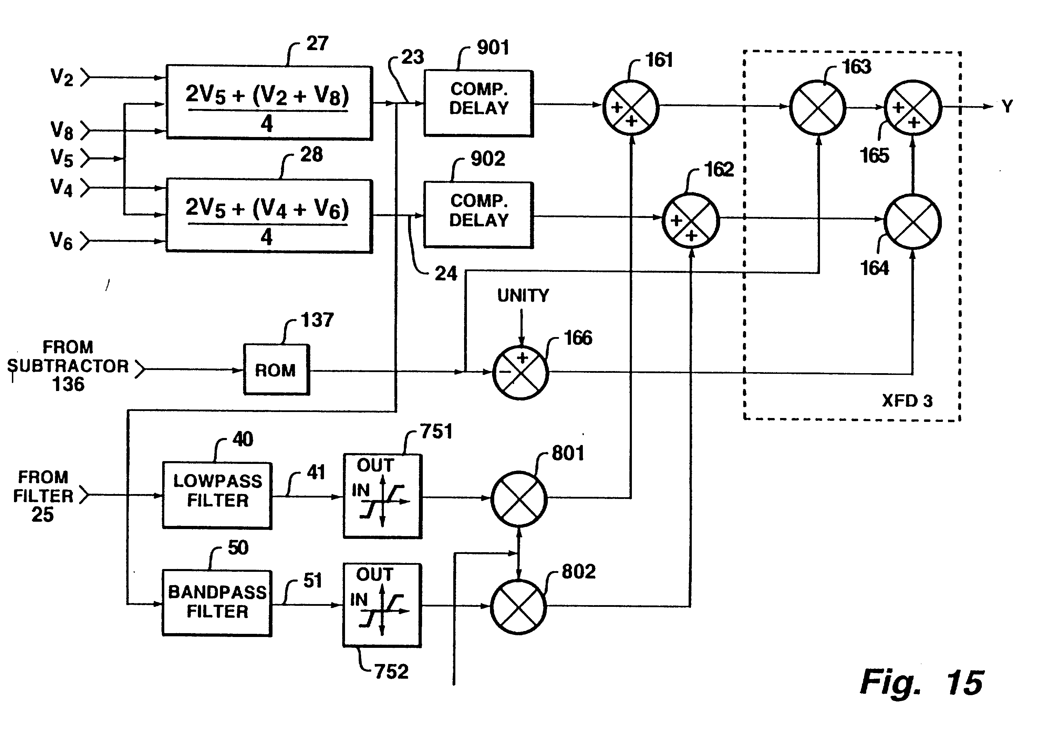

Figure 15 is a block diagram of a modification that can be made to the Figure 8 luma/chroma separator to provide an alternative embodiment of the invention;

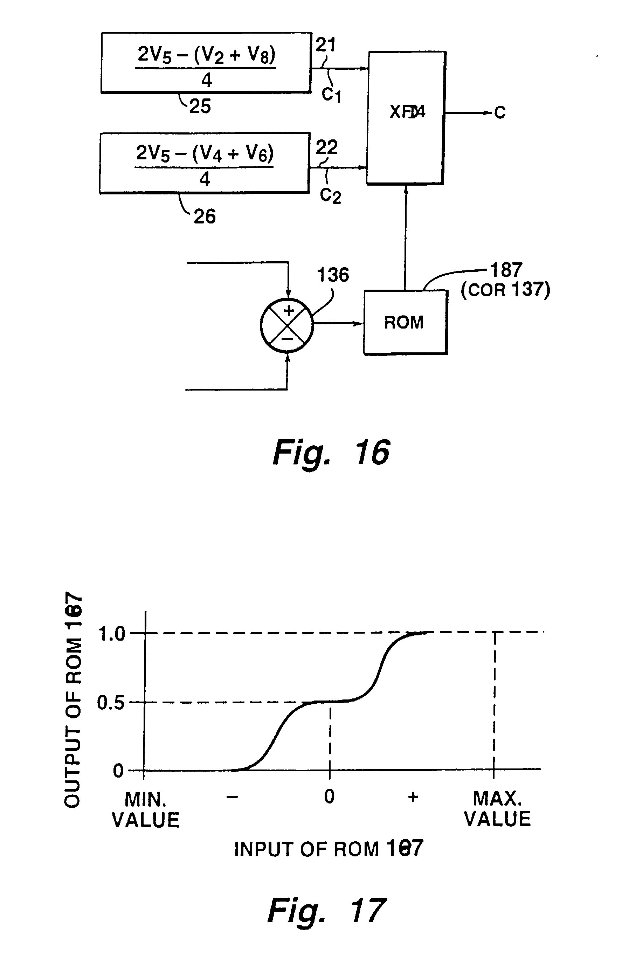

Figure 16 is a block diagram of another modification that can be made to the Figure 8 luma/chroma separator, in which modification a cross-fader circuit is included in the adaptive chroma filtering; and
Figure 17 is a plot of a transfer function described by a look-up table stored in the read-only memory shown in Figure 16.
In the figures, like reference numerals denote like or corresponding parts.

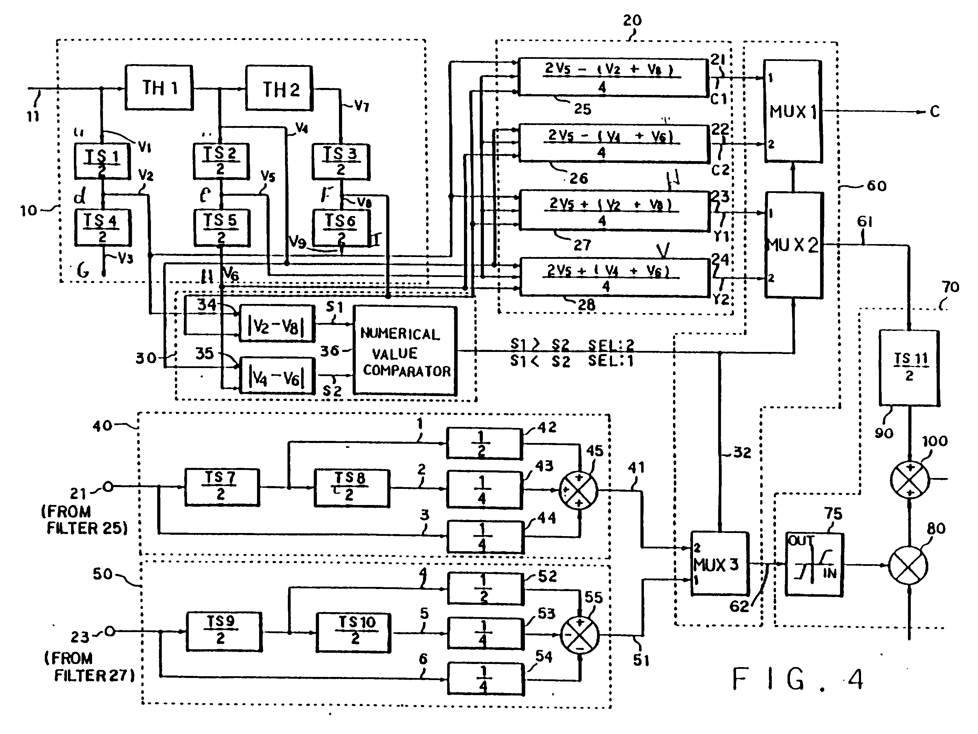

The luma/chroma separator shown in Figure 8 is similar in many respects to that shown in Figure 4, but differs in that the multiplexers MUX2 and MUX3 in the data selecting means 60 of Figure 4 are replaced by cross-faders XFD1 and XFD2, respectively. Further, the selector means 30 of Figure 4 is replaced in Figure 8 by control circuitry 130.

The control circuitry 130 is similar in construction to the selector means 30, with the following exceptions. The numerical value comparator 36 is replaced by a subtractor 136, and a read-only memory 137 is included that is addressed by the full difference output signal from the subtractor 136. The ROM 137 generates the control signal supplied to the cross-faders (or "soft switches") XFD1 and XFD2. The sign bit of the subtractor 136 difference output signal is extracted for application to the multiplexer MUX1 in lieu of the numerical value comparator 36 output signal, causing the operation of the multiplexer MUX1 to remain unchanged. The first absolute value operation means 34 functions as a vertical scan edge detector, and the second absolute value operation means 35 functions as a horizontal scan edge detector in the control circuitry 130.

The composite video signal delay means 10 supplies from points therein, to the two-dimensional spatial filter 20, filter digital signals V1, V2, V3, V4, V5, V6, V7, V8, V9 representative of a scanning square array of nine contiguous picture elements or "pixels" a, b, c, d, e, f, g, h, i. A current one of these square arrays can appear in the television image as a top row of left, middle and right pixels a, b and c; a middle row of left, middle and right pixels d, e and f; and a bottom row of left, middle and right pixels g, h and i. Means 25 for generating a first separated chroma response C1 are included in the two-dimensional spatial filter 20, which means 25 in a bandpass vertical comb filtering procedure combine in a (-1): 2: (-1) ratio the variously delayed composite video signals V2, V5 and V8 descriptive of pixels b, d and h. Means 26 for generating a first separated chroma response are included in the two-dimensional spatial filter 20, which means 26 in a bandpass horizontal comb filtering procedure combine in (-1): 2: (-1) ratio the variously delayed composite video signals V4, V5 and V6 descriptive of pixels c, d and e. Means 27 for generating a first separated luma response Y1 are included in the two- dimensional spatial filter 20, which means 27 in a lowpass vertical comb filtering procedure combine the variously delayed composite video signals V2, V5 and V8 descriptive of pixels b, d and h. Means 28 for generating a second separated luma response are included in the two-dimensional spatial filter 20, which means 28 in a lowpass horizontal comb filtering procedure combines in 1: 2: 1 ratio the variously delayed composite video signals V4, V5 and V6 descriptive of pixels c, d and e.

The cross-fader XFD2 and the ROM 137 together provide means for controlling the ratio between the horizontal peaking signal 51 and the vertical peaking signal 41 as components of an adaptively generated peaking signal supplied as output signal from the crossfader XFD2. This ratio is controlled over a range of values including a value in which the ratio between the horizontal peaking signal 51 and the vertical peaking signal 41 as components of the adaptively generated peaking signal is substantially 1:1; including at least one value in which the ratio between the horizontal peaking signal 51 and the vertical peaking signal 41 as components of the adaptively generated peaking signal is substantially greater than 1:1, with the vertical peaking signal 41 being faded; and including at least one value in which the ratio between the horizontal peaking signal 51 and the vertical peaking signal 41 as components of the adaptively generated peaking signal is substantially less than 1:1, with the horizontal peaking signal 51 being faded. That is, there are more conditions than just the following two: a first condition in which the vertical peaking signal 41 is completely replaced with the horizontal peaking signal 51, and a second condition in which the horizontal peaking signal 51 is completely replaced with the vertical peaking signal 41.

Figure 9 shows the particulars of a representative construction of the cross-faders XFD1 and XFD2 together with their connections to the ROM 137 in the control circuitry 130. The cross-fader control signal word received on the bus 32 from the ROM 137 is subtracted from unity, or plus one, in a digital subtractor 66 to develop the one's complement of that cross-fader control signal word, rather than storing that cross-fader control signal word in both non-complemented and complemented form at each addressable location. This halves the size of the required ROM. The cross- fader XFD1 comprises: a first digital multiplier 63 for multiplying the filter 27 response received on the bus 23 by the cross-fader control signal received on the bus 32 from the ROM 137, a second digital multiplier 64 for multiplying the filter 28 response received on the bus 24 by the one's complement of the cross-fader control signal supplied from the subtractor 66, and a first digital adder 65 for adding together the product signals from the multipliers 63 and 64. The resulting sum signal from the adder 65 is supplied to the delay element 90 in the luminance signal outputting means 70. The cross-fader XFD2 comprises: a third digital multiplier 67 for multiplying the filter 40 response received on the bus 41 by the cross- fader control signal received on the bus 32 from the ROM 137, a fourth digital multiplier 68 for multiplying the filter 50 response received on the bus 51 by the one's complement of the cross-fader control signal supplied from the subtractor 66, and a second digital adder 69 for adding together the product signals from the multipliers 67 and 68. The resulting sum signal from the adder 69 is supplied to the non-linear circuit 75 in the luminance signal outputting means 70, which non-linear circuit 75 cores noise from the luma-high-frequency peaking signal.

Figure 10 shows the input/output characteristic of the ROM 137, which stores a look-up table for the cross-fader control signal. An address supplied to the ROM 137 from the subtractor 136 having a value between a minimum or negative value and a maximum or positive value produces a look-up table output signal having a value between 0 and 1. The conversion may be in accordance with a smooth transition curve 100, where the cross-fader control signal has a value of one-half for a ROM 137 address that is zero-valued. However, another shape such as curve 101 or curve 102 arrived at experimentally as one which produces the best cancelation of the horizontal and vertical carriers of the characteristic curve may be used instead.

Figure 11 shows a circuit that under certain conditions can replace the ROM 137 and that uses a ROM 1370 with half as many addressed word-storage locations as the ROM 137. Replacement is possible where the transfer characteristic of cross-fader control signal versus the difference signal from the subtractor 136 is to be symmetrical about the value one-half. The difference signal from the subtractor 136 is separated into a first portion consisting of all the bits except the sign bit, which bits are supplied to a first selective-bit-complementor 1371 for selective bit complementation, and a second portion consisting of the sign bit. The sign bit of the difference signal from the subtractor 136 controls the selective bit complementation by the selective-bit-complementor 1371 and is added as a carry to the output signal from the selective-bit-complementor 1371 in a digital adder 1372. The elements 1371 and 1372 combine to function as an absolute-value circuit, or digital rectifier, for supplying the absolute value of the difference signal from the subtractor 136 to the ROM 1370 as addressing input signal.

Figure 12 shows the look-up table stored in the ROM 1370. The read-out from the ROM 1370 is supplied to a second selective-bit- complementor 1373 for selective bit complementation. The sign bit of the difference signal from the subtractor 136 controls the selective bit complementation by the selective-bit-complementor 1373 and is supplied as a carry to the addition of the output signal from the selective-bit- complementor 1373 to the value one-half in a digital adder 1374. The sum output signal from the digital adder 1374 provides cross-fader control signal that exhibits a transfer characteristic versus the difference signal from the subtractor 136 that is symmetrical about the value one- half and may by way of example correspond to the curve 100 of Figure 10.

The term "read-only memory" as used herein and in the claims should be construed broadly enough to include equivalent circuits incorporating reduced storage of signal related to cross-fader control signal, such as that equivalent circuit described with reference to Figures 10 and 12.

The transfer characteristic plotted in Figure 12 can be approximated by an x²ⁿ function, and the cross-fader control signal could be generated arithmetically by repeatedly squaring, beginning with the difference signal from the subtractor 136, rather than resorting to table look-up from ROM. Generating the cross-fader control signal by these or any other digital arithmetic methods tends to be slow, so that compensating delays have to be introduced into all the signals supplied to the cross-faders XFD1 and XFD2. So using table look-up from ROM is used in the preferred embodiments of the invention.

U.S. patent application serial No. 07/562,907 describes and claims horizontal scan edge detectors other than that provided by the first absolute value operation means 34. U.S. patent application serial No. 07/562,907 also describes and claims vertical scan edge detectors other than that provided by the first absolute value operation means 35. These other edge detectors were developed by the inventor and his coworkers for being insensitive to remnants of luma spectrum-folding during video tape recording and for better distinguishing against diagonal edge transitions when comb filtering to suppress those remnants from luma. These other edge detectors have value within the context of the improvements in adaptive video peaking circuitry and improvements in luma/chroma separation described in this specification, although suppressing the remnants of luma spectrum-folding during video tape recording are not of particular concern. The value of these other edge detectors is that the two-dimensional spatial filtering they afford involves greater degrees of correlation in the horizontal or vertical direction and accordingly better discriminates against uncorrelated noise affecting edge detection.

Figures 13 and 14 show improved vertical scan edge detectors VED1 and VED2 as described and claimed in U.S. patent application serial No. 07/562,907, either of which detectors VED1 and VED2 can replace the simple vertical scan edge detector 34 in the control circuitry 130 of Figure 8. Figures 13 and 14 also show improved horizontal scan edge detectors HED1 and HED2 as described and claimed in U.S. patent application serial No. 07/562,907, either of which detectors HED1 and HED2 can replace the simple horizontal scan edge detector 35 in the control circuitry 130 of Figure 8. The digital signals V1, V2, V3, V4, V5, V6, V7, V8, V9 are drawn from points a, b, c, d, e, f, g, h, i in the composite video signal delay means 10 of Figure 8.

In Figure 13 the horizontal scan edge detector HED1 includes a digital subtractor. 141 for subtracting V8 from V2, a digital subtractor 142 for subtracting V7 from V1, a digital subtractor 143 for subtracting V9 from V3, a digital subtractor 142 for subtracting V7 from V1, a digital adder 144 for summing the difference signals V1-V7 and V3-V9, a wired binary-place-shifter 145 for halving the [(V1-V7)+(V3-V9)] sum from the adder 144, and a digital subtractor 146 for subtracting the resulting [(V1-V7)+(V3-V9)]/2 term from a difference signal V2-V8 supplied from the subtractor 141. The horizontal scan edge detector HED1 further includes a wired binary-place-shifter 145 for halving the [2(V2-V8)- (V1-V7)-(V3-V9)]/2 difference from the subtractor 141 to generate indications of horizontal scan edges, the absolute value of which [2(V2-V8)- (V1-V7)-(V3-V9)]/4 halved difference is supplied to the subtractor 136 as its minuend input signal.

In Figure 13 the vertical scan edge detector VED1 includes a digital subtractor 151 for subtracting V6 from V4, a digital subtractor 152 for subtracting V6 from V4, a digital subtractor 153 for subtracting V3 from V1, a digital subtractor 152 for subtracting V9 from V7, a digital adder 154 for summing the difference signals V1-V3 and V7-V9, a wired binary-place-shifter 155 for halving the [(V1-V3)+(V7-V9)] sum from the adder 154, and a digital subtractor 156 for subtracting the resulting [(V1-V3)+(V7-V9)]/2 term from a difference signal V6-V4 supplied from the subtractor 151. The vertical scan edge detector VED1 further includes a wired binary-place-shifter 155 for halving the [2(V6- V4)-(V1-V3)-(V7-V9)1/2 difference from the subtractor 151 to generate indications of vertical scan edges, the absolute value of which [2(V6-V4)-(V1-V3)-(V7-V9)1/4 halved difference is supplied to the subtractor 136 as its subtrahend input signal.

As one skilled in the art of digital design will readily discern, owing to the commutive and associative nature of addition and subtraction, a number of straightforward design variations of the vertical scan edge detector VED1 and of the horizontal scan edge detector HED1 exist, and some of these variants may be particularly advantageous with regard to sharing elements with the filters 21-24. For example, the minuend and subtrahend signals may be reversed as supplied to the subtractor 142 and to the subtractor 143 in one modification of the horizontal scan edge detector HED1, and the digital subtractor 146 replaced by a digital adder. In an alternative modification of the horizontal scan edge detector HED1, elements 142-143 are replaced by a digital adder for summing V1 and V3, a digital adder for summing V7 and V9, and a digital subtractor for subtracting the (V7+V9) sum from the (V1+V3) sum to obtain a difference signal [(V1 +V3)-(V7+V9)] that is equivalent to the [(V1-V7)+(V3-V9)] sum from the adder 144 in the horizontal scan edge detector HED1 of Figure 13. Analogous modifications can be made to the vertical scan edge detector VED1.

In Figure 14 the horizontal scan edge detector HED1 includes, in addition to the vertical lowpass filter 27 supplying a response [2V5+(V2+V8)1/4, a vertical lowpass filter 149 supplying a response [2V4+(V1+V7)]/8 and a vertical lowpass filter 1410 supplying a response [2V6+(V3+V9)]/8, which responses are linearly combined in 2: (-1): (-1) ratio in digital adder/subtractor circuitry 1411. The [4V5+2(V2-V4-V6+V8)-(V1+V3+V7+V9)]/8 response from the circuitry 1411 is supplied to the wired binary-place-shifter 145 for halving. The [4V5+2(V2-V4-V6 +V8)-(V1+V3 +V7+V9)]/16 binary- place-shifter 145 response provides indications of horizontal scan edges, the absolute value of which indications are supplied to the subtractor 136 as its minuend input signal.

In Figure 14 the vertical scan edge detector VED2 includes in addition to the horizontal lowpass filter 28 supplying a response [2V5L(V4+V6)]/4, a horizontal lowpass filter 159 supplying a response [2V2+(V1 +V3)]/8 and a horizontal lowpass filter 1510 supplying a response [2V8L(V7+V9)]/8, which responses are linearly combined in 2: (-1): (-1) ratio in digital adder/subtractor circuitry 1511. The [4V5 + 2(-V2 + V4 + V6-V8L)-(V1+V3+V7+V9)]/8 response from the circuitry 1511 is supplied to the wired binary-place-shifter 155 for halving. The [4V5+2(-V2+V4+V6-V8)-(V1+V3+V7+V9)]/16 binary- place-shifter 155 response provides indications of vertical scan edges, the absolute value of which indications are supplied to the subtractor 136 as its subtrahend input signal.

As one skilled in the art of digital design will readily discern, owing to the commutive and associative nature of addition and subtraction, a number of straightforward design variations of the vertical scan edge detector VED2 and of the horizontal scan edge detector HED2 exist. In other variants of the circuitry in Figures 13 and 14, both the wired binary-place-shifters 147 and 157 can be replaced with a wired place shift after the subtractor 136.

Figure 15 shows a modification that can be made to the Figure 8 luma/chroma separator, which modification replaces the two cross-faders XFD1 and XFD2 with a single cross-fader XFD3 in order to get an overall saving of one digital multiplier. The vertical luma-high-frequency peaking response supplied by the filter 40 to the bus 41 and the horizontal luma- highfrequency peaking response supplied by the filter 50 to the bus 51 are not supplied to the multiplexer MUX2 for selection between them for application to the non-linear circuit 75 for noise-coring. Instead, the responses on the lines 41 and 51 are supplied to respective non-linear circuits 751 and 752 for noise-coring, to generate respective multiplicand signals for the digital multipliers 801 and 802. The digital multipliers 801 and 802 receive the same multiplier signal, which determines the amount of luma-high-frequency peaking. Two digital multipliers 801 and 802 are used to determine the amount of luma-high-frequency peaking in the Figure 15 modification, rather than just a single digital multiplier 80 as in the Figure 8 luma/chroma separator; and the digital multipliers 63 and 64 associated with the crossfader XFD1 are replaced by digital multipliers 163 and 164 within the crossfader XFD3. However, the digital multipliers 67 and 68 associated with the crossfader XFD2 are dispensed with, to provide an overall saving of one digital multiplier.

A digital adder 161 sums the noise-cored, gain-adjusted vertical luma-high-frequency peaking response from the digital multiplier 801 with the delayed response of a compensating delay element 901 to the filter 27 response on the bus 23. Another digital adder 162 sums the noise-cored, gain-adjusted horizontal luma-high-frequency peaking response from the digital multiplier 802 with the delayed response of a compensating delay element 902 to the filter 28 response on the bus 24. The sum signals from the adders 161 and 162 are supplied to the crossfader XFD3 for application to the digital multipliers 163 and 164, respectively, therewithin. The digital multiplier 163 multiplies the sum signal from the adder 161 by the cross-fader control signal read from the ROM 137, and the digital multiplier 164 multiplies the sum signal from the adder 162 by the one's complement of that cross-fader control signal as supplied from the digital subtractor 166. The crossfader XFD3 further includes a digital adder 165 for summing the product signals from the digital multipliers 163 and 164, to generate the peaked luminance response Y.

Figure 16 shows a further modification that can easily be made to the luma/chroma separator, as shown in Figure 8 or modified as described above, when cross-fader circuitry is used for adaptive luma filtering. In Figure 16 the multiplexer MUX1 is replaced by a crossfader XFD4, which receives its cross-fader control signal from a read-only memory 187 addressed by the difference signal supplied by the subtractor 136. Since the chroma signal C from the multiplexer MUX1 in the Figure 8 luma/ chroma separator is subsequently synchronously detected to detect colour-difference signals, and since the detector response is customarily low-pass filtered, switching transients in the separated chroma signal C are less likely to generate noticeable artifacts in a television picture than switching transients in the separated luma signal Y. However, soft switching or cross-fading between the C1 chroma separated by vertical bandpass filtering and the C2 chroma separated by horizontal bandpass filtering can still be beneficial enough to justify the cost of two digital multipliers. In the temporal domain, the noise in the C1 chroma separated by vertical bandpass filtering is quite uncorrelated with the noise in the C2 chroma separated by horizontal bandpass filtering, but chroma itself is quite correlated. So, some improvement in chroma signal- to-noise ratio can be achieved in low-detail areas of the television image by combining the C1 and C2 signals in the output chroma signal C.

Figure 17 plots a transfer function that the look-up table entries in the read-only memory 187 can follow. When the difference signal from the subtractor 136 has appreciable value, indicative of the likelihood of cross-luminance appearing in the output chroma signal C, the read-out from the ROM 187 causes the cross-fader XFD4 to select for the output chroma signal C the same one of the C1 and C2 signals that would have been selected by the multiplexer MUX1 in the Figure 4 luma/chroma separator. When the difference signal from the subtractor 136 has negligible value, indicative there is little or no likelihood of cross- luminance appearing in the output chroma signal C, the read-out from the ROM 187 causes the cross-fader XFD4 to average the C 1 and C2 signals to generate the output chroma signal C in the Figure 16 modification of the Figure 8 luma/chroma separator. There is the possibility that the look-up table stored in the ROM 137 can provide for a transfer function suitable for use in all the cross faders XFD1, XFD2 and XFD4 (or in both the cross faders XFD3 and XFD4, if the Figure 8 luma/chroma separator is modified per Figure 15).

The invention may be applied to systems other than NTSC systems - such as, for example, the PAL and SECAM systems used in Europe and elsewhere.

## Claims

1. Adaptive video peaking circuitry for generating an adaptively generated peaking signal responsive to a video signal, said video signal describing line by line scanning of successive image frames and exhibiting changing relative degrees of horizontal correlation and vertical correlation of a picture element currently being scanned and its locally surrounding picture elements, said adaptive video peaking circuitry comprising:
delay circuitry (10) including a plurality of delay elements connected for variously delaying said video signal, the resulting variously delayed video signals generally being descriptive of the scanning of a square array of nine contiguous pixels within a currently scanned image field, said square array having top and middle and bottom rows of pixels arrayed along successive scan lines of said currently scanned image field, said square array having left and middle and right columns of pixels arrayed transversely to successive scan lines of said currently scanned image field;
first bandpass comb filter circuitry (25) for combining said variously delayed video signals descriptive of pixels in said middle column of said square array of nine contiguous pixels, for generating a first bandpass comb filter response;
second bandpass comb filter circuitry (26) for combining said variously delayed video signals descriptive of pixels in said middle row of said square array of nine contiguous pixels, for generating a second bandpass comb filter response thereto;
first lowpass comb filter circuitry (27) for combining said variously delayed video signals descriptive of pixels in said middle column of said square array of nine contiguous pixels, for generating a first lowpass comb filter response;
second lowpass comb filter circuity (28) for combining said variously delayed video signals descriptive of pixels in said middle row of said square array of nine contiguous pixels, for generating a second lowpass comb filter response;
a low-pass filter (40) responding to said first bandpass comb filter response for separating a vertical peaking signal (41) contained in its vertical high frequencies, while suppressing its horizontal high frequencies;
a band-pass filter (50) responding to said first lowpass comb filter response for separating a horizontal peaking signal (51) contained in its horizontal high frequencies;
a vertical-scan edge detector (34) for supplying a vertical-scan edge detector response indicative of the absolute value of the difference between upper and lower pixels in said square array of pixels, a type of which is known in the prior art; and
a horizontal-scan edge detector (35) for supplying a horizontal-scan edge detector response indicative of the absolute value of the difference between left and right pixels in said square array of pixels, a type of which is known in the prior art;
CHARACTERISED BY
a cross-fader (XFD 2) for supplying said automatically adaptive video peaking signal by linearly and constructively combining said horizontal peaking signal and said vertical peaking signal in proportions controlled by a cross-fader control signal, which proportions include at least one value between 0:1 and 1:0;
a subtractor (136) connected for differentially combining said vertical edge detector response and said horizontal edge detector response to generate a difference signal; and
read-only memory circuitry (137;1370-1374) connected for supplying said cross-fader control signal in response to the various values of said difference signal applied thereto as address signal, said cross-fader control signal increasing the proportion of said horizontal peaking signal component and decreasing the proportion of vertical peaking signal component in said automatically adaptive video peaking signal when said horizontal-scan edge detector response exceeds said vertical-scan edge detector response, and said cross-fader control signal respectively decreasing the proportion of said horizontal peaking signal component and increasing the proportion of said vertical peaking signal component in said automatically adaptive video peaking signal when said vertical-scan edge detector response exceeds said horizontal-scan edge detector response.

2. The circuitry of claim 1 CHARACTERISED BY being included in automatically adaptive video peaking circuitry that further includes:
a further cross-fader (XFD 1) for supplying a reduced-detail video signal by linearly and constructively combining said first lowpass comb filter response and said second lowpass comb filter response in proportions controlled by said cross-fader control signal, so as to be similar to those proportions in which said horizontal peaking signal and said vertical peaking signal are combined by said cross-fader (XFD 2); and
circuitry (70) for combining said automatically adaptive video peaking signal supplied by said cross-fader in controlled proportion together with said reduced-detail video signal supplied by said further cross-fader.

3. The circuitry of claims 1 or 2 CHARACTERISED BY being included in a luma/chroma separator for separating luminance and chrominance components of composite video signal and providing automatically adaptive luminance peaking, which said luma/chroma separator further includes:
a further cross-fader (XFD 1) for supplying a reduced-detail video signal by linearly and constructively combining said first lowpass comb filter response and said second lowpass comb filter response in proportions controlled by said cross-fader control signal, so as to be similar to those proportions in which said horizontal peaking signal and said vertical peaking signal are combined by said cross-fader (XFD 2);
circuitry (70) for combining said automatically adaptive video peaking signal supplied by said cross-fader in controlled proportion together with said reduced-detail video signal supplied by said further cross-fader;
chroma selection circuitry (MUX 1) of a type known per se for selecting chroma from said first bandpass comb filter response when said vertical-scan edge detector response is smaller than said horizontal-scan edge detector response and for selecting chroma from said second bandpass comb filter response when said horizontal-scan edge detector response is smaller than said vertical-scan edge detector response.

4. The circuitry of claim 3 CHARACTERISED BY said chroma selection circuitry selecting chroma from said first bandpass comb filter response or from said second bandpass comb filter response, as controlled by a sign bit extracted from said difference signal.

5. The circuitry of claim 1 CHARACTERISED BY being included in a luma/chroma separator for separating luminance and chrominance components of composite video signal and providing automatically adaptive luminance peaking, which said luma/chroma separator further includes:
a further cross-fader (XFD 1) for supplying a reduced-detail video signal by linearly and constructively combining said first lowpass comb filter response and said second lowpass comb filter response in proportions similar to those in which said horizontal peaking signal and said vertical peaking signal are combined by said cross-fader (XFD 2);
circuitry (70) for combining said automatically adaptive video peaking signal supplied by said cross-fader in controlled proportion together with said reduced-detail video signal supplied by said further cross-fader; and
a still further cross-fader (XFD 4) for supplying chrominance signal by linearly and constructively combining said first bandpass comb filter response and said second bandpass comb filter response in proportions controlled by said cross-fader control signal, so as to be similar to those proportions in which said horizontal peaking signal and said vertical peaking signal are combined by said cross-fader (XFD 2).

6. The circuitry of claim 5 wherein said still further cross-fader (XFD 4) comprises:
a respective pair of digital multipliers receptive of separate ones of said first bandpass comb filter response and said second bandpass comb filter response as respective multiplicand signals, receptive of said cross-fader control signal as read from said read-only memory and of a complement of said cross-fader control signal as respective multiplier signals and supplying respective product signals; and
means linearly and constructively combining the respective product signals of said respective pair of multipliers for generating said chrominance signal.

7. The circuitry of any one of claims 3-6 wherein said further cross-fader comprises:
a respective pair of digital multipliers receptive of separate ones of said first lowpass comb filter response and said second lowpass comb filter response as respective multiplicand signals, receptive of said cross-fader control signal as read from said read-only memory and of a complement of said cross-fader control signal as respective multiplier signals and supplying respective product signals; and
means linearly and constructively combining the respective product signal of said respective pair of multipliers for generating said reduced-detail video signal.

8. The circuitry of any one of claims 1-7 wherein said cross-fader comprises:
a respective pair of digital multipliers receptive of separate ones of said horizontal peaking signal and said vertical peaking signal as respective multiplicand signals, receptive of said cross-fader control signal as read from said read-only memory and of a complement of said cross-fader control signal as respective multiplier signals and supplying respective product signals; and
means linearly and constructively combining the respective product signals of said respective pair of multipliers for generating said automatically adaptive video peaking signal.

9. The circuitry of any one of claims 1-8; wherein the pixels in the top row of said square array are identified from left to right as a, b and c, respectively; the pixels in the middle row of said square array are identified from left to right as d, e and f, respectively; and the pixels in the bottom row of said square array are identified from left to right as g, h and i, respectively; CHARACTERISED BY said vertical-scan edge detector combining signals at points a, b, c, g, h and i with weights in (-1/4): (-1/2): (-1/4): (1/4): (1/2): (1/4) ratio for generating said vertical-scan edge detector response.

10. The circuitry of any one of claims 1-9; wherein the pixels in the top row of said square array are identified from left to right as a, b and c, respectively; the pixels in the middle row of said square array are identified from left to right as d, e and f, respectively; and the pixels in the bottom row of said square array are identified from left to right as g, h and i, respectively; CHARACTERISED BY said horizontal-scan edge detector combining signals at points a, c, d, f, g and i with weights in (-1/4): (1/4): (-1/2): (1/2): (-1/4): (1/4) ratio for generating said horizontal-scan edge detector response.

11. The circuitry of any one of claims 1-8; wherein the pixels in the top row of said square array are identified from left to right as a, b and c, respectively; the pixels in the middle row of said square array are identified from left to right as d, e and f, respectively; and the pixels in the bottom row of said square array are identified from left to right as g, h and i, respectively; CHARACTERISED BY said horizontal-scan edge detector combining signals at points a, b, c, d, e, f, g, h and i with weights in (-1/16): (1/8): (-1/16): (-1/8): (1/4): (-1/8): (-1/16): (1/8): (-1/16) ratio for generating said horizontal-scan edge detector response.

12. The circuitry of any one of claims 1-8 and 11; wherein the pixels in the top row of said square array are identified from left to right as a, b and c, respectively; the pixels in the middle row of said square array are identified from left to right as d, e and f, respectively; and the pixels in the bottom row of said square array are identified from left to right as g, h and i, respectively; CHARACTERISED BY said vertical-scan edge detector combining signals at points a, b, c, d, e, f, g, h and i with weights in (-1/16): (-1/8): (-1/16): (1/8): (1/4): (1/8): (-1/16): (-1/8): (-1/16) ratio for generating said vertical scan edge detection response.

13. Video processing apparatus including adaptive video peaking circuitry, an adaptive luma/chroma separator, or an adaptive chroma separator, according to any of the preceding claims.

14. Television and/or video recording apparatus including adaptive video peaking circuitry, an adaptive luma/chroma separator, or an adaptive chroma separator, according to any of claims 1 to 12.

## Patentansprüche

1. Adaptive Videospitzenschaltung zur Erzeugung eines adaptiv erzeugten Spitzensignals in Reaktion auf ein Videosignal, wobei das genannte Videosignal eine zeilenweise Abtastung aufeinanderfolgender Vollbilder beschreibt und den sich ändemden relativen Wert der horizontalen Korrelation und der vertikalen Korrelation eines Bildelements, das gegenwärtig abgetastet wird, und seiner es örtlich umgebenden Pixel zeigt, wobei die genannte adaptive Videospitzenschaltung umfaßt:
eine Verzögerungsschaltung (10), die eine Mehrzahl Verzögerungselemente einschließt, die zum verschiedentlich Verzögen des genannten Videosignals verbunden sind, wobei die sich ergebenden unterschiedlich verzögerten Videosignale im allgemeinen für das Abtasten eines Quadratfeldes von neun aneinandergrenzenden Pixeln innerhalb eines gegenwärtig abgetasteten Vollbilds beschreibend sind, das genannte Quadratfeld eine obere und eine mittlere und eine untere Pixelreihe aufweist, die entlang aufeinanderfolgender Abtastzeilen des gegenwärtig abgetasteten Vollbilds angeordnet sind, wobei das genannte Quadratfeld eine linke und eine mittlere und eine rechte Pixelspalte aufweist, die quer zu aufeinanderfolgenden Abtastzeilen des genannten gegenwärtig abgetasteten Vollbildes mehrfach angeordnet sind;
eine erste Bandpaß-Kammfilterschaltung (25), um die genannten verschiedentlich verzögerten Videosignale, die die Pixel in der genannten mittleren Spalte des genannten Quadratfeldes von neun aneinandergrenzenden Pixeln beschreiben, zu kombinieren, um eine erste Bandpaß-Kammfilterreaktion zu erzeugen;
eine zweite Bandpaß-Kammfilterschaltung (26), um die genannten verschiedentlich verzögerten Videosignale, die die Pixel in der genannten mittleren Reihe des genannten Quadratfeldes von neun aneinandergrenzenden Pixeln beschreiben, zu kombinieren, um eine zweite Bandpaß-Kammfilterreaktion zu erzeugen;
eine erste Tiefpaß-Kammfilterschaltung (27), um die genannten verschiedentlich verzögerten Videosignale, die die Pixel in der genannten mittleren Spalte des genannten Quadratfeldes von neun aneinandergrenzenden Pixeln beschreiben, zu kombinieren, um eine erste TiefpaßKammfilterreaktion zu erzeugen;
eine zweite Tiefpaß-Kammfilterschaltung (28), um die genannten verschiedentlich verzögerten Videosignale, die die Pixel in der genannten mittleren Reihe des genannten Quadratfeldes von neun aneinandergrenzenden Pixeln beschreiben, zu kombinieren, um eine zweite TiefpaßKammfilterreaktion zu erzeugen;
ein Tiefpaßfilter (40), das auf die genannte erste Bandpaß-Kammfilterreaktion reagiert, um ein vertikales Spitzensignal (41) zu trennen, das in ihren vertikalen hohen Frequenzen enthalten ist, während ihre horizontalen hohen Frequenzen unterdrückt werden;
ein Bandpaßfilter (50), das auf die genannte erste Tefpaß-Kammfilterreakfion reagiert, um ein horizontales Spitzensignal (51) zu trennen, das in ihren horizontalen hohen Frequenzen enthalten ist;
eine vertikale Abtastranderfassungseinrichtung (34), um eine vertikale Abtastranderfassungseinrichtungsreaktion zuzuführen, die den Absolutwert der Differenz zwischen den oberen und unteren Pixeln in dem genannten Quadratfeld von Pixeln angibt, von einer aus dem Stand der Technik bekannten Art; und
eine horizontale Abtastranderfassungseinrichtung (35), um eine horizontale Abtastranderfassungseinrichtungsreaktion zuzuführen, die den Absolutwert der Differenz zwischen den linken und rechten Pixeln in dem genannten Quadratfeld von Pixeln angibt, von einer aus dem Stand der Technik bekannten Art;
**gekennzeichnet durch**
eine Überblendungsschaltung (XFD2), um das genannte automatisch adaptive Videospitzensignal zuzuführen, indem das genannte horizontale Spitzensignal und das genannte vertikale Spitzensignal linear und konstruktiv mit Anteilen kombiniert wird, die durch ein Steuersignal für die Überblendungsschaltung gesteuert werden, wobei die Anteile zumindest einen Wert zwischen 0:1 und 1:0 einschließen;
eine Subtraktionseinrichtung (136), die verbunden ist, um differenzmäßig die genannte vertikale Randerfassungseinrichtungsreaktion und die genannte horizontale Randerfassungseinrichtungsreaktion zu kombinieren, um ein Differenzsignal zu erzeugen; und
eine Festwertspeicherschaltung (137; 1370-1374), die verbunden ist, um das genannte Steuersignal der Überblendungsschaltung in Reaktion auf die verschiedenen Werte des genannten Differenzsignals, das darauf angewendet wird, als Adressensignal zuzuführen, wobei das genannte Steuersignal der Überblendungsschaltung in dem genannten automatisch adaptiven Videospitzensignal den Anteil der genannten horizontalen Spitzensignalkomponente erhöht und den Anteil der vertikalen Spitzensignalkomponente verringert, wenn die genannte horizontale Abtastranderfassungseinrichtungsreaktion die genannte vertikale Abtastranderfassungseinrichtungsreaktion überschreitet, und das genannte Steuersignal der Überblendungsschaltung in dem genannten automatisch adaptiven Videospitzensignal jeweils den Anteil der genannten horizontalen Spitzensignalkomponente verringert und den Anteil der genannten vertikalen Spitzensignalkomponente erhöht, wenn die genannte vertikale Abtastranderfassungseinrichtungsreaktion die genannte horizontale Abtastranderfassungseinrichtungsreaktion überschreitet.

2. Die Schaltung des Anspruchs 1, **dadurch gekennzeichnet,** daß sie in einer automatisch adaptiven Videospitzenschaltung eingeschlossen ist, die des weiteren einschließt: eine weitere Überblendungsschaltung (XFD1), um ein Videosignal verringerter Einzelheit zuzuführen, indem die genannte erste Tiefpaß-Kammfilterreakfion und die genannte zweite Tiefpaß-Kammfilterreaktion linear und konstruktiv mit Anteilen kombiniert werden, die durch das genannte Steuersignal der Überblendungsschaltung gesteuert werden, so daß sie jenen Anteilen ähnlich werden, mit denen das genannte horizontale Spitzensignal und das genannte vertikale Spitzensignal durch die Überblendungsschaltung (XFD2) kombiniert werden; und eine Schaltung (70), um das genannte automatisch adaptive Videospitzensignal, das durch die genannte Überblendungsschaltung mit gesteuerten Anteilen zugeführt wird, zusammen mit dem genannten Videosignal verringerter Einzelheit kombiniert wird, das durch die genannte weitere Überblendungsschaltung zugeführt wird.

3. Die Schaltung der Ansprüche 1 oder 2, **dadurch gekennzeichnet,** daß sie in einer Luma/Chroma Trennschaltung zum Trennen der Luminanz- und Chrominanzkomponenten des FBAS-Signals enthalten ist und eine automatisch adaptive Luminanzspitze liefert, wobei die genannte Luma/Chroma Trenneinschaltung des weiteren einschließt:
eine weitere Überblendungsschaltung (XFD1), um ein Videosignal verringerter Einzelheit zuzuführen, indem die genannte erste Tefpaß-Kammfilterreaktion und die genannte zweite Tiefpaß-Kammfilterreaktion linear und konstruktiv mit Anteilen kombiniert werden, die durch das genannte Steuersignal der Überblendungsschaltung gesteuert werden, so daß sie jenen Anteilen ähnlich werden, mit denen das genannte horizontale Spitzensignal und das genannte vertikale Spitzensignal durch die Überblendungsschaltung (XFD2) kombiniert werden; und
eine Schaltung (70), um das genannte automatisch adaptive Videospitzensignal, das durch die genannte Überblendungsschaltung mit gesteuerten Anteilen zugeführt wird, zusammen mit dem genannten Videosignal verringerter Einzelheit kombiniert wird, das durch die genannte weitere Überblendungsschaltung zugeführt wird.
eine Chromaauswählschaltung (MUX1) einer an und für sich bekannten Art, um die Chroma aus der genannten ersten Bandpaß-Kammfilterreaktion auszuwählen, wenn die genannte vertikale Abtastranderfassungseinrichtungsreaktion kleiner als die genannte horizontale Abtastranderfassungseinrichtungsreaktion ist, und um die Chroma aus der genannten zweiten Bandpaß-Kammfilterreaktion auszuwählen, wenn die genannte horizontale Abtastranderfassungseinrichtungsreaktion kleiner als die genannte vertikale Abtastranderfassungseinrichtungsreaktion ist.

4. Die Schaltung des Anspruchs 3, **dadurch gekennzeichnet,** daß die genannte Chromaauswählschaltung die Chroma von der genannten ersten Bandpaß-Kammfilterreaktion oder der genannten zweiten Bandpaß-Kammfilterreaktion auswählt, wie es durch ein Vorzeichenbit gesteuert wird, das von dem genannten Differenzsignal gewommen wird.

5. Die Schaltung des Anspruchs 1, **dadurch gekennzeichnet,** daß sie in einer Luma/Chroma Trennschaltung zum Trennen der Luminanz- und Chrominanzkomponenten des FBAS-Signals enthalten ist und eine automatisch adaptive Luminanzspitze liefert, wobei die genannte Luma/Chroma Trenneinschaltung des weiteren einschließt;
eine weitere Überblendungsschaltung (XFD1), um ein Videosignal verringerter Einzelheit zuzuführen, indem die genannte erste Tiefpaß-Kammfilterreaktion und die genannte zweite Tiefpaß-Kammfilterreaktion linear und konstruktiv mit Anteilen kombiniert werden, die durch das genannte Steuersignal der Überblendungsschaltung gesteuert werden, so daß sie jenen Anteilen ähnlich werden, mit denen das genannte horizontale Spitzensignal und das genannte vertikale Spitzensignal durch die Überblendungsschaltung (XFD2) kombiniert werden;
eine Schaltung (70), um das genannte automatisch adaptive Videospitzensignal, das durch die genannte Überblendungsschaltung mit gesteuerten Anteilen zugeführt wird, zusammen mit dem genannten Videosignal verringerter Einzelheit kombiniert wird, das durch die genannte weitere Überblendungsschaltung zugeführt wird, und
eine noch weitere Überblendungsschaltung (XFD4), um ein Chrominanzsignal verringerter Einzelheit zuzuführen, indem die genannte erste Bandpaß-Kammfilterreaktion und die genannte zweite Bandpaß-Kammfilterreaktion linear und konstruktiv mit Anteilen kombiniert werden, die durch das genannte Steuersignal der Überblendungsschaltung gesteuert werden, so daß sie jenen Anteilen ähnlich werden, mit denen das genannte horizontale Spitzensignal und das genannte vertikale Spitzensignal durch die Überblendungsschaltung (XFD2) kombiniert werden.

6. Die Schaltung des Anspruchs 5, wobei die genannte noch weitere Überblendungsschaltung (XFD4) umfaßt:
ein entsprechendes Paar digitaler Multiplikationseinrichtungen, die getrennt die genannte erste Bandpaß-Kammfilterreaktion und die genannte zweite Bandpaß-Kammfilterreaktion als entsprechende Multiplikandensignale empfangen können, das genannte Steuersignal der Überblendungsschaltung, wie es aus dem genannten Festwertspeicher gelesen wird, und ein Komplement des genannten Steuersignals der Überblendungsschaltung als entsprechende Multiplikatorsignale erhalten können und die jeweiligen Produktsignale liefem; und
eine Einrichtung, die die entsprechenden Produktsignale des genannten entsprechenden Paares von Multiplikationseinrichtungen linear und konstruktiv kombiniert, um das genannte Chrominanzsignal zu erzeugen.

7. Die Schaltung nach irgendeinem der Ansprüche 3-6, wobei die genannte weitere Überblendungsschaltung umfaßt:
ein entsprechendes Paar digitaler Multiplikationseinrichtungen, die getrennt die genannte erste Tiefpaß-Kammfilterreaktion und die genannte zweite Tiefpaß-Kammfilterreaktion als entsprechende Multiplikandensignale empfangen können, das genannte Steuersignal der Überblendungsschaltung, wie es aus dem genannten Festwertspeicher gelesen wird, und ein Komplement des genannten Steuersignals der Überblendungsschaltung als entsprechende Multiplikatorsignale erhalten können und die jeweiligen Produktsignale liefern; und
eine Einrichtung, die die entsprechenden Produktsignale des genannten entsprechenden Paares von Multiplikationseinrichtungen linear und konstruktiv kombiniert, um das genannte Videosignal verringerter Einzelheit zu erzeugen.

8. Die Schaltung nach irgendeinem der Ansprüche 1-7, wobei
ein entsprechendes Paar digitaler Multiplikationseinrichtungen, die getrennt das genannte horizontale Spitzensignal und das genannte vertikale Spitzensignal als entsprechende Multiplikandensignale empfangen können, das genannte Steuersignal der Überblendungsschaltung, wie es aus dem genannten Festwertspeicher gelesen wird, und ein Komplement des genannten Steuersignals der Überblendungsschaltung als entsprechende Multiplikatorsignale erhalten können und die jeweiligen Produktsignale liefern; und
eine Einrichtung, die die entsprechenden Produktsignale des genannten entsprechenden Paares von Multiplikafionseinrichtungen linear und konstruktiv kombiniert, um das genannte automatisch adaptive Spitzensignal zu erzeugen.

9. Die Schaltung nach irgendeinem der Ansprüche 1-8, wobei die Pixel in der oberen Reihe des genannten Quadratfeldes von links nach rechts als a, b bzw. c gekennzeichnet sind; die Pixel in der mittleren Reihe des genannten Quadratfeldes von links nach rechts als d, e bzw. f gekennzeichnet sind, und die Pixel in der unteren Reihe des genannten Quadratfeldes von links nach rechts als g, h bzw. i gekennzeichnet sind; **dadurch gekennzeichnet,** daß die genannte vertikale Abtastranderfassungseinrichtung Signale an den Punkten a, b, c, g, h und i mit Gewichten im Verhältnis (-1/4):(-1/2):(-1/4):(1/4):(1/2):(1/4) kombiniert, um die genannte vertikale Abtastranderfassungseinrichtungsreaktion zu erzeugen.

10. Die Schaltung nach irgendeinem der Ansprüche 1-9, wobei die Pixel in der oberen Reihe des genannten Quadratfeldes von links nach rechts als a, b bzw. c gekennzeichnet sind; die Pixel in der mittleren Reihe des genannten Quadratfeldes von links nach rechts als d, e bzw. f gekennzeichnet sind, und die Pixel in der unteren Reihe des genannten Quadratfeldes von links nach rechts als g, h bzw. i gekennzeichnet sind; **dadurch gekennzeichnet,** daß die genannte horizontale Abtastranderfassungseinrichtung Signale an den Punkten a, c, d, f, g und i mit Gewichten im Verhältnis (-1/4):(1/4):(-1/2):(1/2):(-1/4):(1/4) kombiniert, um die genannte horzontale Abtastranderfassungseinrichtungsreaktion zu erzeugen.

11. Die Schaltung nach irgendeinem der Ansprüche 1-8, wobei die Pixel in der oberen Reihe des genannten Quadratfeldes von links nach rechts als a, b bzw. c gekennzeichnet sind; die Pixel in der mittleren Reihe des genannten Quadratfeldes von links nach rechts als d, e bzw. f gekennzeichnet sind, und die Pixel in der unteren Reihe des genannten Quadratfeldes von links nach rechts als g, h bzw. i gekennzeichnet sind; **dadurch gekennzeichnet,** daß die genannte horizontale Abtastranderfassungseinrichtung Signale an den Punkten a, b, c, d, e, f, g, h und i mit Gewichten im Verhältnis (-1/16):(1/8):(-1/16):(-1/8):(1/4):(-1/8):(-1/16):(1/8):(-1/16) kombiniert, um die genannte horizontale Abtastranderfassungseinrichtungsreaktion zu erzeugen.

12. Die Schaltung nach irgendeinem der Ansprüche 1-8, wobei die Pixel in der oberen Reihe des genannten Quadratfeldes von links nach rechts als a, b bzw. c gekennzeichnet sind; die Pixel in der mittleren Reihe des genannten Quadratfeldes von links nach rechts als d, e bzw. f gekennzeichnet sind, und die Pixel in der unteren Reihe des genannten Quadratfeldes von links nach rechts als g, h bzw. i gekennzeichnet sind; **dadurch gekennzeichnet,** daß die genannte vertikale Abtastranderfassungseinrichtung Signale an den Punkten a, b, c, d, e, f, g, h und i mit Gewichten im Verhältnis (-1/16):(-1/8):(-1/16):(1/8):(1/4):(1/8):(-1/16):(-1/8):(-1/16) kombiniert, um die genannte vertikale Abtastranderfassungseinrichtungsreaktion zu erzeugen.

13. Videoverarbeitungsvorrichtung, die eine adaptive Videospitzenschaltung, eine adaptive Luma/Chroma Trennschaltung oder eine adaptive Chromatrennschaltung gemäß irgendeinem der vorhergehenden Ansprüche einschließt.

14. Fernseh- und/oder Videoaufzeichnungsvorrichtung, die eine adaptive Videospitzenschaltung, eine adaptive Luma/Chroma Trennschaltung oder eine adaptive Chromatrennschaltung gemäß irgendeinem der Ansprüche 1 bis 12 einschließt.

## Revendications

1. Circuit vidéo d'alignement de crête adaptatif pour produire un signal d'alignement de crête produit de manière adaptative en réponse à un signal vidéo, ledit signal vidéo décrivant un balayage ligne par ligne de trames complètes d'image successives et présentant des degrés relatifs variables de corrélation horizontale et de corrélation verticale d'un élément d'image en cours de balayage et de ses éléments d'image l'entourant localement, ledit circuit vidéo d'alignement de crête adaptatif comprenant:
un circuit de retard (10) incluant une pluralité d'éléments de retard connectés de façon à retarder de manière variable ledit signal vidéo, les signaux vidéo retardés de manière variable résultants décrivant de manière générale le balayage d'une matrice carrée de neuf pixels contiguës dans une trame d'image en cours de balayage, ladite matrice carrée ayant des rangées supérieure, intermédiaire et inférieure de pixels disposés suivant des lignes de balayage successives de ladite trame d'image en cours de balayage, ladite matrice carrée ayant des colonnes de droite, intermédiaire et de gauche de pixels disposés transversalement à des lignes de balayage successives de ladite trame d'image en cours de balayage;
un premier circuit de filtrage en peigne passe-bande (25) pour combiner lesdits signaux vidéo retardés de manière variable décrivant des pixels dans ladite colonne intermédiaire de ladite matrice carrée de neuf pixels contiguës, pour produire une première réponse de filtre en peigne passe-bande;
un second circuit de filtrage en peigne passe-bande (26) pour combiner lesdits signaux vidéo retardés de manière variable décrivant des pixels dans ladite rangée intermédiaire de ladite matrice carrée de neuf pixels contiguës, pour produire une seconde réponse de filtre en peigne passe-bande;
un premier circuit de filtrage en peigne passe-bas (27) pour combiner lesdits signaux vidéo retardés de manière variable décrivant des pixels dans ladite colonne intermédiaire de ladite matrice carrée de neuf pixels contiguës, pour produire une première réponse de filtre en peigne passe-bas;
un second circuit de filtrage en peigne passe-bas (28) pour combiner lesdits signaux vidéo retardés de manière variable décrivant des pixels dans ladite rangée intermédiaire de ladite matrice carrée de neuf pixels contiguës, pour produire une seconde réponse de filtre en peigne passe-bas;
un filtre passe-bas (40) répondant à ladite première réponse de filtre en peigne passe-bande pour séparer un signal d'alignement de crête vertical (41) contenu dans les hautes fréquences verticales de celle-ci, tout en supprimant ses hautes fréquences horizontales;
un filtre passe-bande (50) répondant à ladite première réponse de filtre en peigne passe-bas pour séparer un signal d'alignement de crête horizontal (51) contenu dans les hautes fréquences horizontales de celle-ci;
un détecteur de bord de balayage vertical (34) pour fournir une réponse de détecteur de bord de balayage vertical représentant la valeur absolue de la différence entre des pixels supérieur et inférieur dans ladite matrice carrée de pixels, dont un type est connu dans la technique antérieure; et
un détecteur de bord de balayage horizontal (35) pour fournir une réponse de détecteur de bord de balayage horizontal représentant la valeur absolue de la différence entre des pixels de droite et de gauche dans ladite matrice carrée de pixels, dont un type est connu dans la technique antérieure;
caractérisé par un circuit de fondu enchaîné (XFD 2) pour fournir ledit signal vidéo d'alignement de crête auto-adaptatif en combinant de manière linéaire et constructive ledit signal d'alignement de crête horizontal et ledit signal d'alignement de crête vertical selon des proportions commandées par un signal de commande de circuit de fondu enchaîné, ces proportions incluant au moins une valeur entre 0:1 et 1:0;
un soustracteur (136) connecté pour combiner différentiellement ladite réponse de détecteur de bord vertical et ladite réponse de détecteur de bord horizontal afin de produire un signal de différence; et
un circuit de mémoire morte (137; 1370 à 1374) connecté pour fournir ledit signal de commande de circuit de fondu enchaîné en réponse aux différentes valeurs dudit signal de différence qui lui est appliqué en tant que signal d'adresse, ledit signal de commande de circuit de fondu enchaîné augmentant la proportion de ladite composante de signal d'alignement de crête horizontal et réduisant la proportion de ladite composante de signal d'alignement de crête vertical dans ledit signal vidéo d'alignement de crête auto-adaptatif lorsque ladite réponse de détecteur de bord de balayage horizontal dépasse ladite réponse de détecteur de bord de balayage vertical, et ledit signal de commande de circuit de fondu enchaîné, respectivement, réduisant la proportion de ladite composante de signal d'alignement de crête horizontal et augmentant la proportion de ladite composante de signal d'alignement de crête vertical dans ledit signal vidéo d'alignement de crête auto-adaptatif lorsque ladite réponse de détecteur de bord de balayage vertical dépasse ladite réponse de détecteur de bord de balayage horizontal.

2. Circuit selon la revendication 1, caractérisé en ce qu'il est inclus dans un circuit vidéo d'alignement de crête auto-adaptatif qui comprend également:
un circuit de fondu enchaîné supplémentaire (XFD 1) pour fournir un signal vidéo de détail fin en combinant de manière linéaire et constructive ladite première réponse de filtre en peigne passe-bas et ladite seconde réponse de filtre en peigne passe-bas selon des proportions commandées par ledit signal de commande de circuit de fondu enchaîné de façon à ce qu'elles soient semblables aux proportions avec lesquelles ledit signal d'alignement de crête horizontal et ledit signal d'alignement de crête vertical sont combinés par ledit circuit de fondu enchaîné (XFD 2); et
un circuit (70) pour combiner ledit signal vidéo d'alignement de crête auto-adaptatif fourni par ledit circuit de fondu enchaîné selon une proportion commandée avec ledit signal vidéo de détail fin fourni par ledit circuit de fondu enchaîné supplémentaire.

3. Circuit selon la revendication 1 ou 2, caractérisé en ce qu'il est inclus dans un séparateur de luminance/chrominance pour séparer des composantes de luminance et de chrominance d'un signal vidéo composite et fournir un alignement de crête de luminance auto-adaptatif, ledit séparateur de luminance/chrominance comprenant également:
un circuit de fondu enchaîné supplémentaire (XFD 1) pour fournir un signal vidéo de détail fin en combinant de manière linéaire et constructive ladite première réponse de filtre en peigne passe-bas et ladite seconde réponse de filtre en peigne passe-bas selon des proportions commandées par ledit signal de commande de circuit de fondu enchaîné de façon à ce qu'elles soient semblables aux proportions avec lesquelles ledit signal d'alignement de crête horizontal et ledit signal d'alignement de crête vertical sont combinés par ledit circuit de fondu enchaîné (XFD 2);
un circuit (70) pour combiner ledit signal vidéo d'alignement de crête auto-adaptatif fourni par ledit circuit de fondu enchaîné selon une proportion commandée avec ledit signal vidéo de détail fin fourni par ledit circuit de fondu enchaîné supplémentaire;
un circuit de sélection de chrominance (MUX 1) de type connu pour sélectionner la chrominance dans ladite première réponse de filtre en peigne passe-bande lorsque ladite réponse de détecteur de bord de balayage vertical est inférieure à ladite réponse de détecteur de bord de balayage horizontal et pour sélectionner la chrominance dans ladite seconde réponse de filtre en peigne passe-bande lorsque ladite réponse de détecteur de bord de balayage horizontal est inférieure à ladite réponse de détecteur de bord de balayage vertical.

4. Circuit selon la revendication 3, caractérisé en ce que ledit circuit de sélection de chrominance sélectionne la chrominance dans ladite première réponse de filtre en peigne passe-bande ou dans ladite seconde réponse de filtre en peigne passe-bande, de la manière commandée par un bit de signe extrait dudit signal de différence.

5. Circuit selon la revendication 1, caractérisé en ce qu'il est inclus dans un séparateur de luminance/chrominance pour séparer des composantes de luminance et de chrominance d'un signal vidéo composite et fournir un alignement de crête de luminance auto-adaptatif, ledit séparateur de luminance/chrominance comprenant également:
un circuit de fondu enchaîné supplémentaire (XFD 1) pour fournir un signal vidéo de détail fin en combinant de manière linéaire et constructive ladite première réponse de filtre en peigne passe-bas et ladite seconde réponse de filtre en peigne passe-bas selon des proportions semblables à celles avec lesquelles ledit signal d'alignement de crête horizontal et ledit signal d'alignement de crête vertical sont combinés par ledit circuit de fondu enchaîné (XFD 2);
un circuit (70) pour combiner ledit signal vidéo d'alignement de crête auto-adaptatif fourni par ledit circuit de fondu enchaîné selon une proportion commandée avec ledit signal vidéo de détail fin fourni par ledit circuit de fondu enchaîné supplémentaire; et
un autre circuit de fondu enchaîné supplémentaire (XFD 4) pour fournir un signal de chrominance en combinant de manière linéaire et constructive ladite première réponse de filtre en peigne passe-bande et ladite seconde réponse de filtre en peigne passe-bande selon des proportions commandées par ledit signal de commande de circuit de fondu enchaîné de façon à ce qu'elles soient semblables aux proportions avec lesquelles ledit signal d'alignement de crête horizontal et ledit signal d'alignement de crête vertical sont combinés par ledit circuit de fondu enchaîné (XFD 2).

6. Circuit selon la revendication 5, dans lequel ledit autre circuit de fondu enchaîné supplémentaire (XFD 4) comprend:
une paire respective de multiplieurs numériques recevant de manière séparée ladite première réponse de filtre en peigne passe-bande et ladite seconde réponse de filtre en peigne passe-bande en tant que des signaux de multiplicande respectifs, recevant ledit signal de commande de circuit de fondu enchaîné tel que lu dans ladite mémoire morte et un signal complémentaire dudit signal de commande de circuit de fondu enchaîné en tant que des signaux de multiplicateur respectifs, et fournissant des signaux de produit respectifs; et
des moyens combinant de manière linéaire et constructive les signaux de produit respectifs de ladite paire respective de multiplieurs pour produire ledit signal de chrominance.

7. Circuit selon l'une quelconque des revendications 3 à 6, dans lequel ledit circuit de fondu enchaîné supplémentaire comprend:
une paire respective de multiplieurs numériques recevant de manière séparée ladite première réponse de filtre en peigne passe-bas et ladite seconde réponse de filtre en peigne passe-bas en tant que des signaux de multiplicande respectifs, recevant ledit signal de commande de circuit de fondu enchaîné tel que lu dans ladite mémoire morte et un signal complémentaire dudit signal de commande de circuit de fondu enchaîné en tant que des signaux de multiplicateur respectifs, et fournissant des signaux de produit respectifs; et
des moyens combinant de manière linéaire et constructive les signaux de produit respectifs de ladite paire respective de multiplieurs pour produire ledit signal vidéo de détail fin.

8. Circuit selon l'une quelconque des revendications 1 à 7, dans lequel ledit circuit de fondu enchaîné comprend:
une paire respective de multiplieurs numériques recevant de manière séparée ledit signal d'alignement de crête horizontal et ledit signal d'alignement de crête vertical en tant que des signaux de multiplicande respectifs, recevant ledit signal de commande de circuit de fondu enchaîné tel que lu dans ladite mémoire morte et un signal complémentaire dudit signal de commande de circuit de fondu enchaîné en tant que des signaux de multiplicateur respectifs, et fournissant des signaux de produit respectifs; et
des moyens combinant de manière linéaire et constructive les signaux de produit respectifs de ladite paire respective de multiplieurs pour produire ledit signal vidéo d'alignement de crête auto-adaptatif.

9. Circuit selon l'une quelconque des revendications 1 à 8, dans lequel les pixels dans la rangée supérieure de ladite matrice carrée sont identifiés de gauche à droite comme étant a, b et c, respectivement; les pixels dans la rangée intermédiaire de ladite matrice carrée sont identifiés de gauche à droite comme étant d, e et f, respectivement; et les pixels dans la rangée inférieure de ladite matrice carrée sont identifiés de gauche à droite comme étant g, h et i, respectivement; caractérisé en ce que ledit détecteur de bord de balayage vertical combine des signaux aux points a, b, c, g, h et i avec des poids dans des rapports de (-1/4): (-1/2): (-1/4): (1/4): (1/2): (1/4) pour produire ladite réponse de détecteur de bord de balayage vertical.

10. Circuit selon l'une quelconque des revendications 1 à 9, dans lequel les pixels dans la rangée supérieure de ladite matrice carrée sont identifiés de gauche à droite comme étant a, b et c, respectivement; les pixels dans la rangée intermédiaire de ladite matrice carrée sont identifiés de gauche à droite comme étant d, e et f, respectivement; et les pixels dans la rangée inférieure de ladite matrice carrée sont identifiés de gauche à droite comme étant g, h et i, respectivement; caractérisé en ce que ledit détecteur de bord de balayage horizontal combine des signaux aux points a, c, d, f, g et i avec des poids dans des rapports (-1/4): (1/4): (-1/2): (1/2): (-1/4): (1/4) pour produire ladite réponse de détecteur de bord de balayage horizontal.

11. Circuit selon l'une quelconque des revendications 1 à 8, dans lequel les pixels dans la rangée supérieure de ladite matrice carrée sont identifiés de gauche à droite comme étant a, b et c, respectivement; les pixels dans la rangée intermédiaire de ladite matrice carrée sont identifiés de gauche à droite comme étant d, e et f, respectivement; et les pixels dans la rangée inférieure de ladite matrice carrée sont identifiés de gauche à droite comme étant g, h et i, respectivement; caractérisé en ce que ledit détecteur de bord de balayage horizontal combine des signaux aux points a, b, c, d, e, f, g, h et i avec des poids dans des rapports (-1/16): (1/8): (-1/16): (-1/8) : (1/4): (-1/8) : (-1/16): (1/8): (-1/16) pour produire ladite réponse de détecteur de bord de balayage horizontal.

12. Circuit selon l'une quelconque des revendications 1 à 8 et 11, dans lequel les pixels dans la rangée supérieure de ladite matrice carrée sont identifiés de gauche à droite comme étant a, b et c, respectivement; les pixels dans la rangée intermédiaire de ladite matrice carrée sont identifiés de gauche à droite comme étant d, e et f, respectivement; et les pixels dans la rangée inférieure de ladite matrice carrée sont identifiés de gauche à droite comme étant g, h et i, respectivement; caractérisé en ce que ledit détecteur de bord de balayage vertical combine des signaux aux points a, b, c, d, e, f, g, h et i avec des poids dans des rapports (-1/16): (-1/8): (-1/16): (1/8): (1/4): (1/8): (-1/16): (-1/8) : (-1/16) pour produire ladite réponse de détection de bord de balayage vertical.

13. Dispositif de traitement vidéo incluant un circuit vidéo d'alignement de crête adaptatif, un séparateur de luminance/chrominance adaptatif, ou un séparateur de chrominance adaptatif, selon l'une quelconque des revendications précédentes.

14. Dispositif d'enregistrement de télévision et/ou vidéo comprenant un circuit vidéo d'alignement de crête adaptatif, un séparateur de luminance/chrominance adaptatif, ou un séparateur de chrominance adaptatif, selon l'une quelconque des revendications 1 à 12.
